# EUROPEAN PATENT APPLICATION

(11) **EP 4 510 667 A1**
(43) Date of publication of application: **19.02.2025**
(21) Application number: 23799192.2
(22) Date of filing: 24.04.2023
(51) Int. Cl.: H04W 12/69

(54) **COMMUNICATION METHOD AND APPARATUS**

(30) Priority: 06.05.2022 CN 202210488627
(71) Applicant: Huawei Technologies Co., Ltd., Shenzhen, Guangdong 518129 (CN)
(72) Inventor: HENDA, Noamen Ben, Shenzhen, Guangdong 518129 (CN); HU, Li, Shenzhen, Guangdong 518129 (CN); WU, Rong, Shenzhen, Guangdong 518129 (CN)
(74) Representative: Goddar, Heinz J.
(86) International application number: PCT/CN2023/090190
(87) International publication number: WO 2023/213205

(57) **Abstract**

This application provides a communication method and an apparatus. In an implementation, the communication method is applied to a universal integrated circuit card, the universal integrated circuit card is configured with a subscription permanent identifier and a pseudo identifier corresponding to the subscription permanent identifier, and the method includes: The universal integrated circuit card generates a subscription concealed identifier based on the pseudo identifier, where a length of a username included in the pseudo identifier is different from a length of a username included in the subscription permanent identifier, and the length of the username included in the pseudo identifier is greater than a first threshold and less than a second threshold; and then the universal integrated circuit card sends the subscription concealed identifier to a mobile equipment. The foregoing solutions can improve user privacy security.

## Description

This application claims priority to Chinese Patent Application NO. 202210488627.0, filed with the China National Intellectual Property Administration on May 6, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and an apparatus.

### BACKGROUND

A subscription permanent identifier (subscription permanent identifier, SUPI) is a globally unique permanent identifier allocated by an operator or third party to a user. During 5G communication, to avoid exposing the SUPI of the user at an air interface, encryption calculation may be performed on the SUPI to obtain a subscription concealed identifier (subscription concealed identifier, SUCI). The user can use the SUCI for network registration.

However, in some cases, using the SUCI for network registration may still leak a user identity, causing user privacy leakage. How to improve user privacy security is a problem that needs to be considered currently.

### SUMMARY

This application provides a communication method, to improve user privacy security.

According to a first aspect, a communication method applied to a universal integrated circuit card is provided. The universal integrated circuit card is configured with a subscription permanent identifier and a pseudo identifier corresponding to the subscription permanent identifier, and the method includes: The universal integrated circuit card generates a subscription concealed identifier based on the pseudo identifier, where a length of a username included in the pseudo identifier is different from a length of a username included in the subscription permanent identifier, and the length of the username included in the pseudo identifier is greater than a first threshold and less than a second threshold; and the universal integrated circuit card sends the subscription concealed identifier to a mobile equipment.

In the foregoing solution, the universal integrated circuit card generates the subscription concealed identifier based on the pseudo identifier. Because the length of the username included in the pseudo identifier is greater than the first threshold and less than the second threshold, a length of the generated subscription concealed identifier is also greater than the first threshold and less than the second threshold. Therefore, a case in which an attacker can infer a user identity based on the length of the subscription concealed identifier because the length of the subscription concealed identifier is excessively long or excessively short (for example, greater than the second threshold or less than the first threshold) can be avoided, to protect user privacy.

With reference to the first aspect, in some implementations of the first aspect, the method further includes: The universal integrated circuit card receives a user identity request message from the mobile equipment; and in response to the user identity request message, the universal integrated circuit card sends the subscription permanent identifier to the mobile equipment.

With reference to the first aspect, in some implementations of the first aspect, the length of the username included in the subscription permanent identifier is less than the first threshold or greater than the second threshold.

In the foregoing solution, when the length of the username included in the subscription permanent identifier is excessively long or excessively short (that is, greater than the second threshold or less than the first threshold), the pseudo identifier instead of the subscription permanent identifier is used to generate the subscription concealed identifier, so that a case in which the attacker can infer the user identity based on the length of the subscription concealed identifier because the length of the subscription concealed identifier is excessively long or too short can be avoided, to protect the user privacy.

With reference to the first aspect, in some implementations of the first aspect, values of the first threshold and the second threshold are determined by distribution of lengths of usernames included in a plurality of subscribed subscription permanent identifiers in an operator network. With reference to the first aspect, in some implementations of the first aspect, the method further includes: The universal integrated circuit card determines an encryption algorithm; and that the universal integrated circuit card generates a subscription concealed identifier based on the pseudo identifier is specifically: When the encryption algorithm is a non-null algorithm, the universal integrated circuit card generates the subscription concealed identifier based on the pseudo identifier and the encryption algorithm.

In the foregoing solution, the universal integrated circuit card generates the subscription concealed identifier based on the pseudo identifier and the non-null encryption algorithm only when the encryption algorithm used to generate the pseudo identifier is the non-null algorithm. In other words, when the encryption algorithm used to generate the pseudo identifier is the null algorithm, it indicates that a user does not have a corresponding security requirement. In this case, the universal integrated circuit card may not use the pseudo identifier, but use the subscription permanent identifier to generate the subscription concealed identifier.

With reference to the first aspect, in some implementations of the first aspect, the subscription concealed identifier includes first indication information, and the first indication information indicates that the subscription concealed identifier is generated based on the pseudo identifier.

In the foregoing solution, the first indication information may be carried in the subscription concealed identifier, so that another network element (for example, a data management network element) may determine, based on the first indication information, that the subscription concealed identifier is generated based on the pseudo identifier.

With reference to the first aspect, in some implementations of the first aspect, the pseudo identifier includes second indication information, and the second indication information indicates that the username included in the pseudo identifier is a mapped username.

In the foregoing solution, the second indication information may be carried in the pseudo identifier, so that another network element (for example, a data management network element) may determine, based on the second indication information, that the subscription concealed identifier is generated based on the pseudo identifier.

With reference to the first aspect, in some implementations of the first aspect, both the pseudo identifier and the subscription permanent identifier are represented by using a network access identifier format.

According to a second aspect, a communication method is provided. The method may be performed by a data management network element, or may be performed by a component (for example, a chip or a circuit) of the data management network element. This is not limited. For ease of description, the following provides descriptions by using an example in which the method is performed by the data management network element. The data management network element is configured with a subscription permanent identifier and a pseudo identifier corresponding to the subscription permanent identifier. The method includes: The data management network element receives a request message from an authentication service function network element, where the request message includes a subscription concealed identifier; the data management network element decrypts the subscription concealed identifier to obtain the pseudo identifier, the data management network element determines the subscription permanent identifier based on the pseudo identifier, where a length of a username included in the pseudo identifier is different from a length of a username included in the subscription permanent identifier, and the length of the username included in the pseudo identifier is greater than a first threshold and less than a second threshold; and the data management network element sends a response message to the authentication service function network element, where the response message includes the subscription permanent identifier.

In the foregoing solution, after obtaining the subscription concealed identifier, the data management network element decrypts the subscription concealed identifier to obtain the pseudo identifier, determines the subscription permanent identifier based on the pseudo identifier, and uses the subscription permanent identifier to perform a subsequent procedure. Because the length of the username included in the pseudo identifier is greater than the first threshold and less than the second threshold, a length of the subscription concealed identifier is also greater than the first threshold and less than the second threshold. Therefore, a case in which an attacker can infer a user identity based on the length of the subscription concealed identifier because the length of the subscription concealed identifier is excessively long or excessively short (for example, greater than the second threshold or less than the first threshold) can be avoided, to protect user privacy.

With reference to the second aspect, in some implementations of the second aspect, the length of the username included in the subscription permanent identifier is less than the first threshold or greater than the second threshold.

With reference to the second aspect, in some implementations of the second aspect, values of the first threshold and the second threshold are determined by distribution of lengths of usernames included in a plurality of subscribed subscription permanent identifiers in an operator network.

With reference to the second aspect, in some implementations of the second aspect, that the data management network element determines the subscription permanent identifier based on the pseudo identifier includes: When the subscription concealed identifier includes first indication information, the data management network element determines the subscription permanent identifier based on the pseudo identifier, where the first indication information indicates that the subscription concealed identifier is generated based on the pseudo identifier.

In the foregoing solution, the data management network element may determine, based on the first indication information, that the subscription concealed identifier is generated based on the pseudo identifier. Based on this, the data management network element may determine a real user identity based on the pseudo identifier, that is, determine the subscription permanent identifier.

With reference to the second aspect, in some implementations of the second aspect, that the data management network element determines the subscription permanent identifier based on the pseudo identifier includes: When the pseudo identifier includes second indication information, the data management network element determines the subscription permanent identifier based on the pseudo identifier, where the second indication information indicates that the subscription concealed identifier is generated based on the pseudo identifier.

In the foregoing solution, the data management network element may determine, based on the second indication information, that the subscription concealed identifier is generated based on the pseudo identifier. Based on this, the data management network element may determine a real user identity based on the pseudo identifier, that is, determine the subscription permanent identifier.

With reference to the second aspect, in some implementations of the second aspect, that the data management network element determines the subscription permanent identifier based on the pseudo identifier includes: When the data management network element does not store subscription data corresponding to the pseudo identifier, the data management network element determines the subscription permanent identifier based on the pseudo identifier.

In the foregoing solution, when the data management network element determines that the subscription data corresponding to the pseudo identifier is not stored, the data management network element does not directly perform an authentication failure procedure, but determines the corresponding subscription permanent identifier based on the pseudo identifier.

With reference to the second aspect, in some implementations of the second aspect, both the pseudo identifier and the subscription permanent identifier are represented by using a network access identifier format.

According to a third aspect, a communication method is provided. The method includes: A mobile equipment obtains a subscription permanent identifier and a pseudo identifier corresponding to the subscription permanent identifier from a universal integrated circuit card, where a length of a username included in the pseudo identifier is different from a length of a username included in the subscription permanent identifier, and the length of the username included in the pseudo identifier is greater than a first threshold and less than a second threshold; the mobile equipment generates a subscription concealed identifier based on the pseudo identifier; the mobile equipment sends a registration request message to a mobility management network element, where the registration request message includes the subscription concealed identifier; the mobile equipment receives an authentication complete message from the mobility management network element; and in response to the authentication complete message, the mobile equipment generates, based on the subscription permanent identifier, a key used for communication with the mobility management network element.

Based on the foregoing solution, after obtaining the pseudo identifier from the universal integrated circuit card, the mobile equipment generates the subscription concealed identifier based on the pseudo identifier, and initiates a registration procedure by using the pseudo identifier. Because the length of the username included in the pseudo identifier is greater than the first threshold and less than the second threshold, a length of the subscription concealed identifier is also greater than the first threshold and less than the second threshold. Therefore, a case in which an attacker can infer a user identity based on the length of the subscription concealed identifier because the length of the subscription concealed identifier is excessively long or excessively short (for example, greater than the second threshold or less than the first threshold) can be avoided, to protect user privacy.

With reference to the third aspect, in some implementations of the third aspect, the length of the username included in the subscription permanent identifier is less than the first threshold or greater than the second threshold.

With reference to the third aspect, in some implementations of the third aspect, values of the first threshold and the second threshold are determined by distribution of lengths of usernames included in a plurality of subscribed subscription permanent identifiers in an operator network.

With reference to the third aspect, in some implementations of the third aspect, the subscription concealed identifier includes first indication information, and the first indication information indicates that the subscription concealed identifier is generated based on the pseudo identifier.

In the foregoing solution, the first indication information may be carried in the subscription concealed identifier, so that another network element (for example, a data management network element) may determine, based on the first indication information, that the subscription concealed identifier is generated based on the pseudo identifier.

With reference to the third aspect, in some implementations of the third aspect, the pseudo identifier includes second indication information, and the second indication information indicates that the username included in the pseudo identifier is a mapped username.

In the foregoing solution, the second indication information may be carried in the pseudo identifier, so that another network element (for example, a data management network element) may determine, based on the second indication information, that the subscription concealed identifier is generated based on the pseudo identifier.

With reference to the third aspect, in some implementations of the third aspect, that a mobile equipment obtains a subscription permanent identifier and a pseudo identifier corresponding to the subscription permanent identifier from a universal integrated circuit card includes: The mobile equipment sends a user identity request message to the universal integrated circuit card; and the mobile equipment receives the subscription permanent identifier and the pseudo identifier from the universal integrated circuit card.

With reference to the third aspect, in some implementations of the third aspect, that a mobile equipment obtains a subscription permanent identifier and a pseudo identifier corresponding to the subscription permanent identifier from a universal integrated circuit card includes: The mobile equipment sends a user identity request message to the universal integrated circuit card; the mobile equipment receives the subscription permanent identifier from the universal integrated circuit card; the mobile equipment sends a calculation information request message to the universal integrated circuit card; and the mobile equipment receives a public key and the pseudo identifier from the universal integrated circuit card, where the public key is used to generate the subscription concealed identifier.

With reference to the third aspect, in some implementations of the third aspect, both the pseudo identifier and the subscription permanent identifier are represented by using a network access identifier format.

According to a fourth aspect, a communication method is provided. The method includes: A mobile equipment receives a subscription permanent identifier from a universal integrated circuit card; the mobile equipment determines whether a length of a username of the subscription permanent identifier is greater than a second threshold or less than a first threshold; when the length of the username of the subscription permanent identifier is greater than the second threshold or less than the first threshold, a data management network element generates a pseudo identifier based on the subscription permanent identifier; the mobile equipment generates a subscription concealed identifier based on the pseudo identifier; and the mobile equipment sends a registration request message to a mobility management network element, where the registration request message includes the subscription concealed identifier.

With reference to the fourth aspect, in some implementations of the fourth aspect, that the mobile equipment generates a pseudo identifier based on the subscription permanent identifier includes: The mobile equipment uses a realm name of the subscription permanent identifier as a realm name of the pseudo identifier; and the mobile equipment performs a hash operation on the username of the subscription permanent identifier to generate a username of the pseudo identifier.

With reference to the fourth aspect, in some implementations of the fourth aspect, the method further includes: The mobile equipment receives the first threshold and the second threshold from the universal integrated circuit card.

With reference to the fourth aspect, in some implementations of the fourth aspect, the subscription concealed identifier includes first indication information, and the first indication information indicates that the subscription concealed identifier is generated based on the pseudo identifier.

With reference to the fourth aspect, in some implementations of the fourth aspect, the pseudo identifier includes second indication information, and the second indication information indicates that the username included in the pseudo identifier is a mapped username.

With reference to the fourth aspect, in some implementations of the fourth aspect, both the pseudo identifier and the subscription permanent identifier are represented by using a network access identifier.

According to a fifth aspect, a communication method is provided. The method includes: A universal integrated circuit card obtains a pseudo identifier, where the pseudo identifier corresponds to a subscription permanent identifier, a length of a username of the pseudo identifier is different from a length of a username of the subscription permanent identifier, and the length of the username of the pseudo identifier is greater than a first threshold and less than a second threshold; and the universal integrated circuit card sends the pseudo identifier to a mobile equipment.

With reference to the fifth aspect, in some implementations of the fifth aspect, the username of the pseudo identifier includes indication information, and the indication information indicates that a subscription concealed identifier is generated based on the pseudo identifier.

With reference to the fifth aspect, in some implementations of the fifth aspect, that a universal integrated circuit card obtains a pseudo identifier includes: The universal integrated circuit card determines whether the length of the username of the subscription permanent identifier is greater than the second threshold or less than the first threshold; and when the length of the username included in the subscription permanent identifier is greater than the second threshold or less than the first threshold, the universal integrated circuit card generates the pseudo identifier based on the subscription permanent identifier.

With reference to the fifth aspect, in some implementations of the fifth aspect, that the universal integrated circuit card generates the pseudo identifier based on the subscription permanent identifier includes: The universal integrated circuit card uses a realm name of the subscription permanent identifier as a realm name of the pseudo identifier; and the universal integrated circuit card performs a hash operation on the username of the subscription permanent identifier to generate the username of the pseudo identifier.

With reference to the fifth aspect, in some implementations of the fifth aspect, both the pseudo identifier and the subscription permanent identifier are represented by using a network access identifier.

According to a sixth aspect, a communication apparatus is provided. The apparatus is configured with a subscription permanent identifier and a pseudo identifier corresponding to the subscription permanent identifier, and the apparatus includes: a processing module, configured to generate a subscription concealed identifier based on the pseudo identifier, where a length of a username included in the pseudo identifier is different from a length of a username included in the subscription permanent identifier, and the length of the username included in the pseudo identifier is greater than a first threshold and less than a second threshold; and a transceiver module, configured to send the subscription concealed identifier to a mobile equipment.

With reference to the sixth aspect, in some implementations of the sixth aspect, the transceiver module is further configured to receive a user identity request message from the mobile equipment; and send the subscription permanent identifier to the mobile equipment.

With reference to the sixth aspect, in some implementations of the sixth aspect, the length of the username included in the subscription permanent identifier is less than the first threshold or greater than the second threshold.

With reference to the sixth aspect, in some implementations of the sixth aspect, values of the first threshold and the second threshold are determined by distribution of lengths of usernames included in a plurality of subscribed subscription permanent identifiers in an operator network.

With reference to the sixth aspect, in some implementations of the sixth aspect, the processing module is further configured to determine an encryption algorithm, where the processing module is specifically configured to: when the encryption algorithm is a non-null algorithm, generate, by the universal integrated circuit card, the subscription concealed identifier based on the pseudo identifier and the encryption algorithm.

With reference to the sixth aspect, in some implementations of the sixth aspect, the subscription concealed identifier includes first indication information, and the first indication information indicates that the subscription concealed identifier is generated based on the pseudo identifier.

With reference to the sixth aspect, in some implementations of the sixth aspect, the pseudo identifier includes second indication information, and the second indication information indicates that the username included in the pseudo identifier is a mapped username.

With reference to the sixth aspect, in some implementations of the sixth aspect, both the pseudo identifier and the subscription permanent identifier are represented by using a network access identifier format.

According to a seventh aspect, a communication apparatus is provided. The apparatus is configured with a subscription permanent identifier and a pseudo identifier corresponding to the subscription permanent identifier, and the apparatus includes: a transceiver module, configured to receive a request message from an authentication service function network element, where the request message includes a subscription concealed identifier; and a processing module, configured to decrypt the subscription concealed identifier to obtain the pseudo identifier; determine the subscription permanent identifier based on the pseudo identifier, where a length of a username included in the pseudo identifier is different from a length of a username included in the subscription permanent identifier, and the length of the username included in the pseudo identifier is greater than a first threshold and less than a second threshold. The transceiver module is further configured to send a response message to the authentication service function network element, and the response message includes the subscription permanent identifier.

With reference to the seventh aspect, in some implementations of the seventh aspect, the length of the username included in the subscription permanent identifier is less than the first threshold or greater than the second threshold.

With reference to the seventh aspect, in some implementations of the seventh aspect, values of the first threshold and the second threshold are determined by distribution of lengths of usernames included in a plurality of subscribed subscription permanent identifiers in an operator network.

With reference to the seventh aspect, in some implementations of the seventh aspect, when the subscription concealed identifier includes first indication information, the processing module is specifically configured to determine the subscription permanent identifier based on the pseudo identifier, where the first indication information indicates that the subscription concealed identifier is generated based on the pseudo identifier.

With reference to the seventh aspect, in some implementations of the seventh aspect, when the pseudo identifier includes second indication information, the processing module is specifically configured to determine the subscription permanent identifier based on the pseudo identifier, where the second indication information indicates that the subscription concealed identifier is generated based on the pseudo identifier.

With reference to the seventh aspect, in some implementations of the seventh aspect, when a data management network element does not store subscription data corresponding to the pseudo identifier, the processing module is specifically configured to determine the subscription permanent identifier based on the pseudo identifier.

With reference to the seventh aspect, in some implementations of the seventh aspect, both the pseudo identifier and the subscription permanent identifier are represented by using a network access identifier format.

According to an eighth aspect, a communication apparatus is provided. The apparatus includes: a transceiver module, configured to obtain a subscription permanent identifier and a pseudo identifier corresponding to the subscription permanent identifier from a universal integrated circuit card, where a length of a username included in the pseudo identifier is different from a length of a username included in the subscription permanent identifier, and the length of the username included in the pseudo identifier is greater than a first threshold and less than a second threshold; and a processing module, configured to generate a subscription concealed identifier based on the pseudo identifier. The transceiver module is further configured to send a registration request message to the mobility management network element, the registration request message includes the subscription concealed identifier and a mobile equipment receives an authentication complete message from the mobility management network element. The processing module is further configured to generate, based on the subscription permanent identifier, a key used for communication with the mobility management network element.

With reference to the eighth aspect, in some implementations of the eighth aspect, the length of the username included in the subscription permanent identifier is less than the first threshold or greater than the second threshold.

With reference to the eighth aspect, in some implementations of the eighth aspect, values of the first threshold and the second threshold are determined by distribution of lengths of usernames included in a plurality of subscribed subscription permanent identifiers in an operator network.

With reference to the eighth aspect, in some implementations of the eighth aspect, the subscription concealed identifier includes first indication information, and the first indication information indicates that the subscription concealed identifier is generated based on the pseudo identifier.

With reference to the eighth aspect, in some implementations of the eighth aspect, the pseudo identifier includes second indication information, and the second indication information indicates that the username included in the pseudo identifier is a mapped username.

With reference to the eighth aspect, in some implementations of the eighth aspect, the transceiver module is specifically configured to send a user identity request message to the universal integrated circuit card; and receive the subscription permanent identifier and the pseudo identifier from the universal integrated circuit card.

With reference to the eighth aspect, in some implementations of the eighth aspect, the transceiver module is specifically configured to send a user identity request message to the universal integrated circuit card; receive the subscription permanent identifier from the universal integrated circuit card; send a calculation information request message to the universal integrated circuit card; and receive a public key and the pseudo identifier from the universal integrated circuit card, where the public key is used to generate the subscription concealed identifier.

With reference to the eighth aspect, in some implementations of the eighth aspect, both the pseudo identifier and the subscription permanent identifier are represented by using a network access identifier format.

According to a ninth aspect, a communication apparatus is provided. The apparatus includes: a transceiver module, configured to receive a subscription permanent identifier from a universal integrated circuit card; and a processing module, configured to determine whether a length of a username of the subscription permanent identifier is greater than the second threshold or less than the first threshold. The processing module is further configured to: when the length of the username of the subscription permanent identifier is greater than the second threshold or less than the first threshold, generate a pseudo identifier based on the subscription permanent identifier; and generate a subscription concealed identifier based on the pseudo identifier. The transceiver module is further configured to send a registration request message to a mobility management network element, where the registration request message includes the subscription concealed identifier.

With reference to the ninth aspect, in some implementations of the ninth aspect, the processing module is specifically configured to use a realm name of the subscription permanent identifier as a realm name of the pseudo identifier; and perform a hash operation on the username of the subscription permanent identifier to generate a username of the pseudo identifier.

With reference to the ninth aspect, in some implementations of the ninth aspect, the apparatus further includes: the transceiver module, further configured to receive the first threshold and the second threshold from the universal integrated circuit card.

With reference to the ninth aspect, in some implementations of the ninth aspect, the subscription concealed identifier includes first indication information, and the first indication information indicates that the subscription concealed identifier is generated based on the pseudo identifier.

With reference to the ninth aspect, in some implementations of the ninth aspect, the pseudo identifier includes second indication information, and the second indication information indicates that the username included in the pseudo identifier is a mapped username.

With reference to the ninth aspect, in some implementations of the ninth aspect, both the pseudo identifier and the subscription permanent identifier are represented by using a network access identifier.

According to a tenth aspect, a communication apparatus is provided. The apparatus includes: a processing module, configured to obtain a pseudo identifier, where the pseudo identifier corresponds to a subscription permanent identifier, a length of a username of the pseudo identifier is different from a length of a username of the subscription permanent identifier, and the length of the username of the pseudo identifier is greater than a first threshold and less than a second threshold; and a transceiver module, configured to send the pseudo identifier to a mobile equipment.

With reference to the tenth aspect, in some implementations of the tenth aspect, the username of the pseudo identifier includes indication information, and the indication information indicates that a subscription concealed identifier is generated based on the pseudo identifier.

With reference to the tenth aspect, in some implementations of the tenth aspect, the processing module is specifically configured to determine whether the length of the username of the subscription permanent identifier is greater than the second threshold or less than the first threshold; and when the length of the username included in the subscription permanent identifier is greater than the second threshold or less than the first threshold, generate the pseudo identifier based on the subscription permanent identifier.

With reference to the tenth aspect, in some implementations of the tenth aspect, the processing module is specifically configured to use a realm name of the subscription permanent identifier as a realm name of the pseudo identifier; and perform a hash operation on the username of the subscription permanent identifier to generate the username of the pseudo identifier.

With reference to the tenth aspect, in some implementations of the tenth aspect, both the pseudo identifier and the subscription permanent identifier are represented by using a network access identifier.

According to an eleventh aspect, a communication apparatus is provided. The apparatus is configured to perform any method provided in the first aspect to the fifth aspect. Specifically, the apparatus may include units and/or modules configured to perform the methods provided in the first aspect to the fifth aspect, for example, a processing module and/or a transceiver module (which may also be referred to as a communication module).

In an implementation, the apparatus is a universal integrated circuit card, or a chip, a chip system, or a circuit in the universal integrated circuit card. When the apparatus is a chip, a chip system, or a circuit in the universal integrated circuit card, the communication module may be an input/output interface, an interface circuit, an output circuit, an input circuit, a pin, a related circuit, or the like on the chip, the chip system, or the circuit. The processing module may be a processor, a processing circuit, a logic circuit, or the like. In this case, the apparatus may include a unit and/or a module configured to perform the method provided in the first aspect or the fifth aspect, for example, a processing unit and/or a communication unit.

In another possible case, the apparatus is a data management network element, or a chip, a chip system, or a circuit in the data management network element. In this case, the apparatus may include a unit and/or a module configured to perform the method provided in the second aspect, for example, a processing module and/or a transceiver module.

In another possible case, the apparatus is a mobile equipment, or a chip, a chip system, or a circuit in the mobile equipment. In this case, the apparatus includes a unit and/or a module configured to perform the method provided in the third aspect or the fourth aspect, for example, a processing module and/or a transceiver module.

Optionally, the transceiver may be a transceiver circuit. Optionally, the input/output interface may be an input/output circuit.

Optionally, the transceiver may be a transceiver circuit. Optionally, the input/output interface may be an input/output circuit.

According to a twelfth aspect, a communication apparatus is provided. The apparatus includes: a memory, configured to store a program; and a processor, configured to execute the program stored in the memory. When the program stored in the memory is executed, the processor is configured to perform any method provided in the first aspect to the fifth aspect.

According to a thirteenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a fourteenth aspect, a computer-readable storage medium is provided. The computer-readable medium stores program code to be executed by a device, and the program code is for performing any method provided in the first aspect to the fifth aspect.

According to a fifteenth aspect, a computer program product including instructions is provided. When the computer program product runs on a computer, the computer is enabled to perform any method provided in the first aspect to the fifth aspect.

According to a sixteenth aspect, a chip is provided. The chip includes a processor and a communication interface. The processor reads, through the communication interface, instructions stored in a memory, to perform any method provided in the first aspect to the fifth aspect.

Optionally, in an implementation, the chip may further include the memory. The memory stores the instructions, and the processor is configured to execute the instructions stored in the memory. When the instructions are executed, the processor is configured to perform any method provided in the first aspect to the fifth aspect.

According to a seventeenth aspect, a terminal device is provided, including the foregoing universal integrated circuit card and the mobile equipment.

According to an eighteenth aspect, a communication system is provided, including the foregoing session management network element.

Optionally, the communication system may further include the foregoing universal integrated circuit card.

Optionally, the communication system may further include the foregoing mobile equipment.

### BRIEF DESCRIPTION OF DRAWINGS

(a) in FIG. 1 and (b) in FIG. 1 are diagrams of network architectures to which embodiments of this application are applicable;
FIG. 2 is a diagram of a structure of a subscription concealed identifier;
FIG. 3A and FIG. 3B show a network registration and authentication procedure 300;
FIG. 4(a) and FIG. 4(b) are schematic flowcharts of a method 400 and a method 410 according to embodiments of this application;
FIG. 5(a)-1 and FIG. 5(a)-2 are a schematic flowchart of a method 500 according to an embodiment of this application;

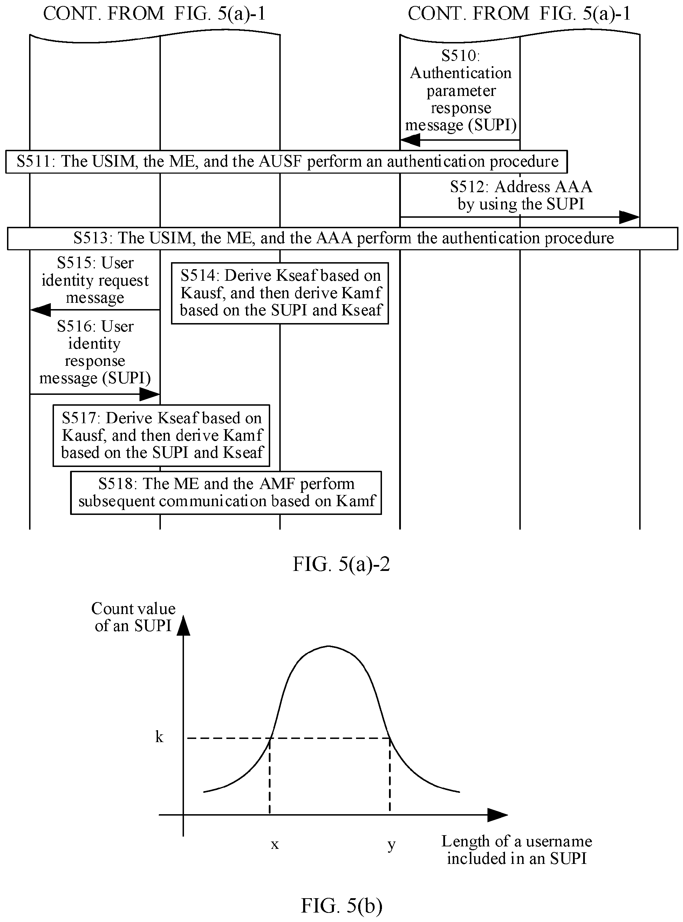

FIG. 5(b) is a curve diagram of a relationship between a length of a username included in a subscription permanent identifier and a count value of the subscription permanent identifier;

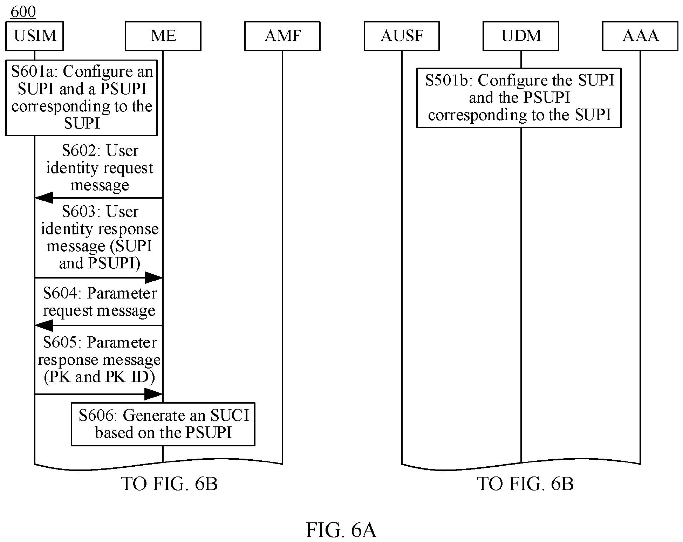

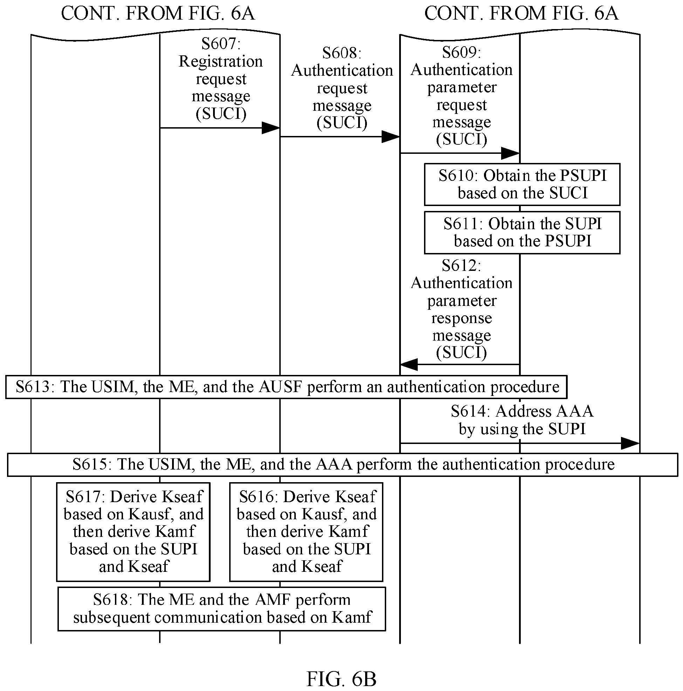

FIG. 6A and FIG. 6B are a schematic flowchart of a method 600 according to an embodiment of this application;

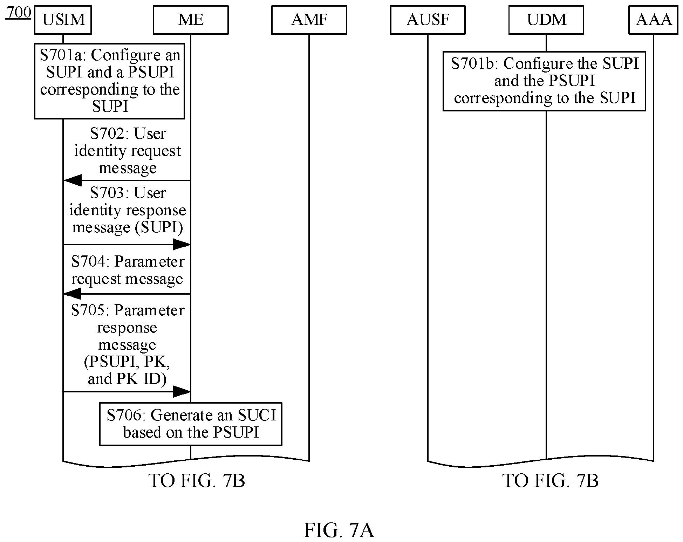

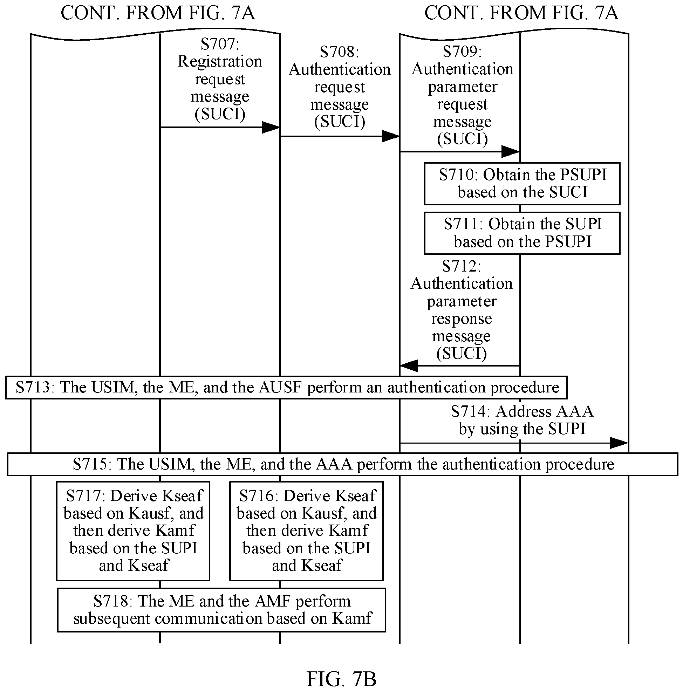

FIG. 7A and FIG. 7B are a schematic flowchart of a method 700 according to an embodiment of this application;

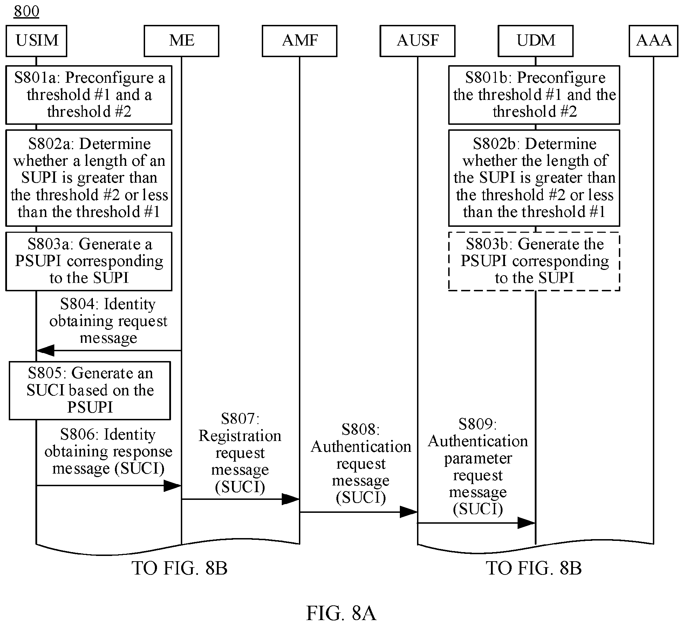

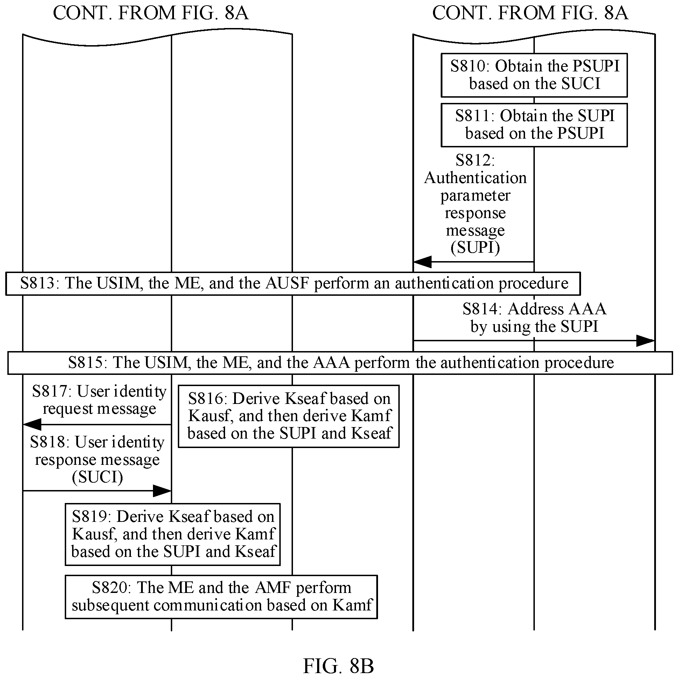

FIG. 8A and FIG. 8B are a schematic flowchart of a method 800 according to an embodiment of this application;

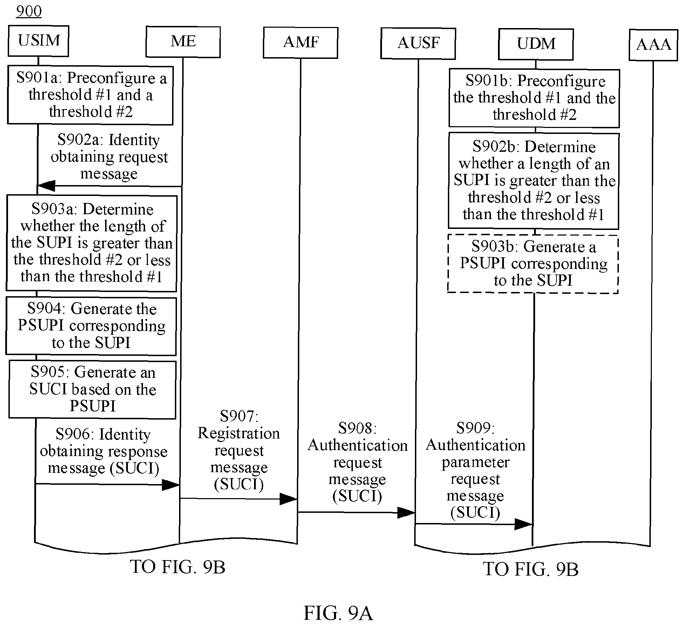

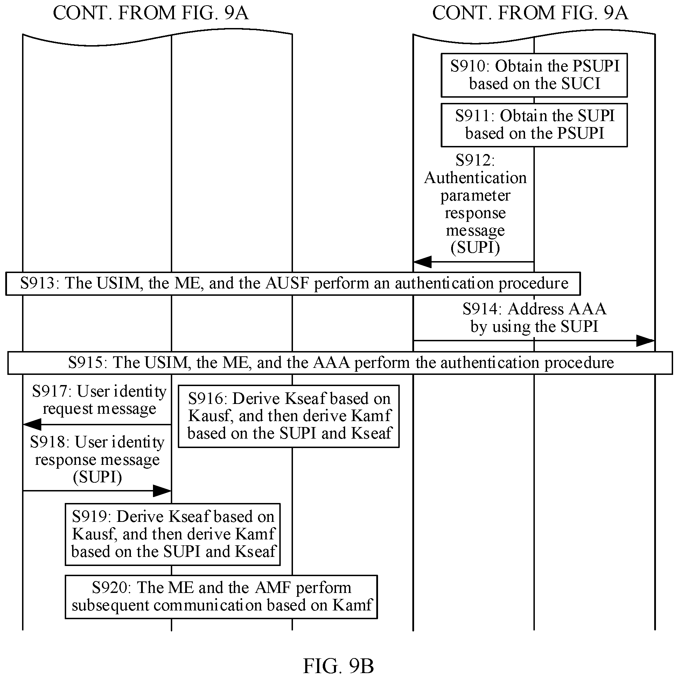

FIG. 9A and FIG. 9B are a schematic flowchart of a method 900 according to an embodiment of this application;

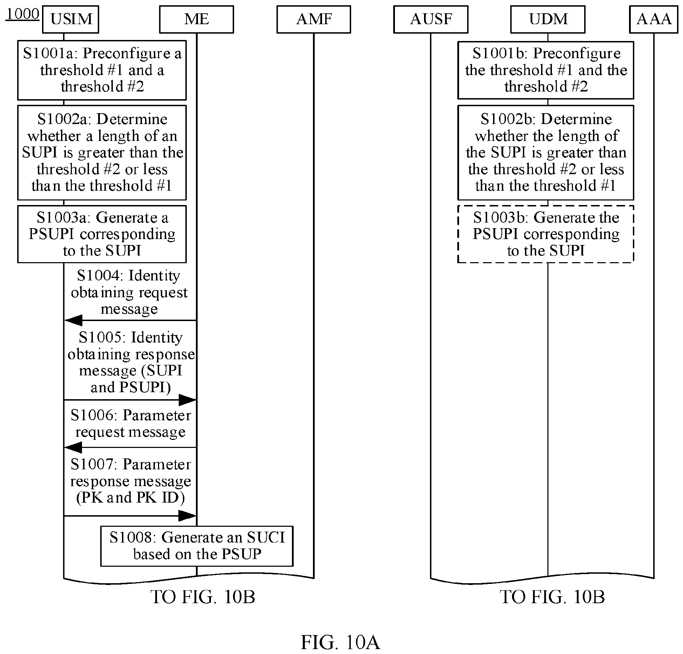

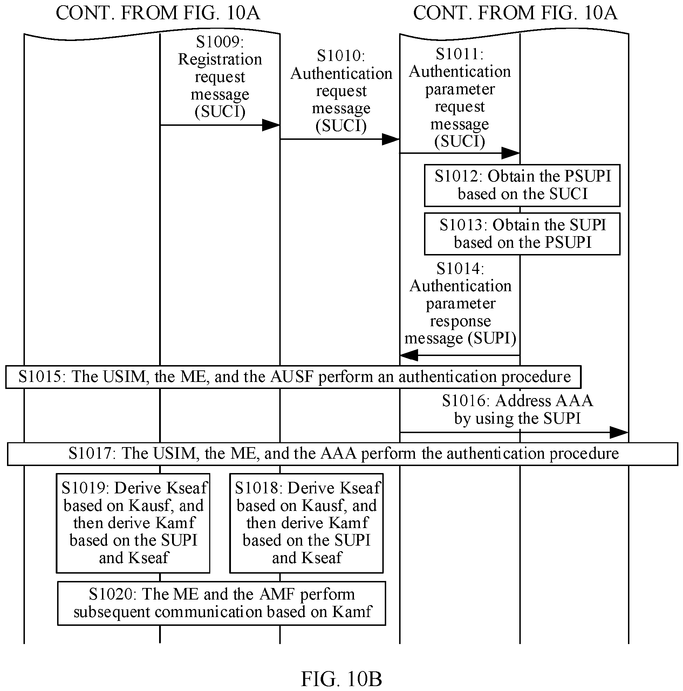

FIG. 10A and FIG. 10B are a schematic flowchart of a method 1000 according to an embodiment of this application;

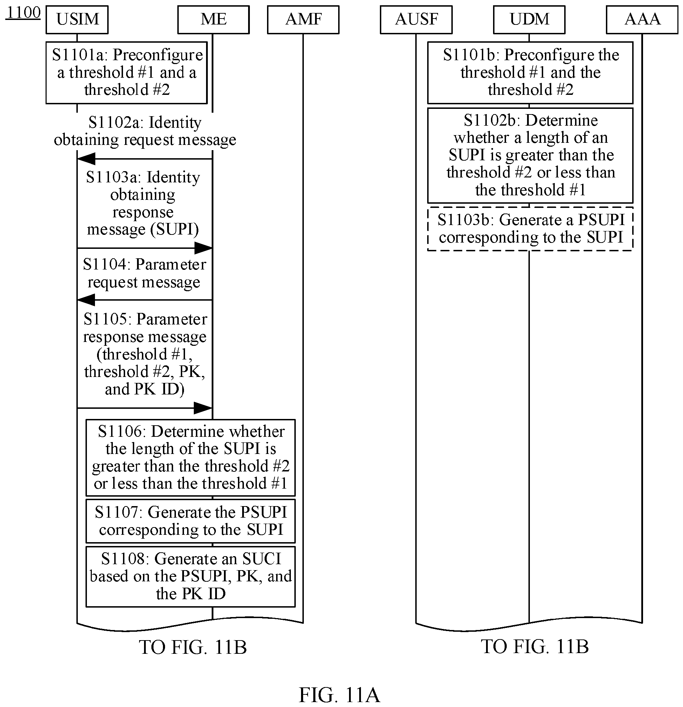

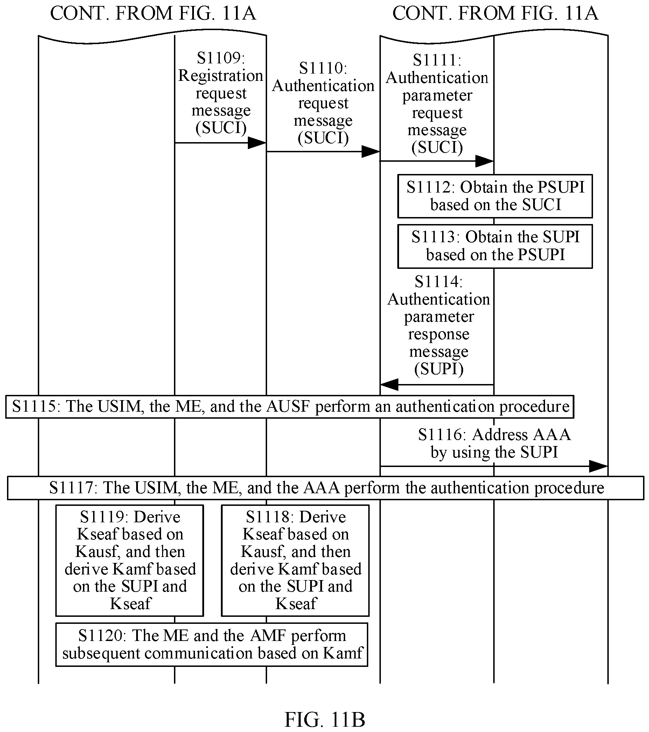

FIG. 11A and FIG. 11B are a schematic flowchart of a method 1100 according to an embodiment of this application;

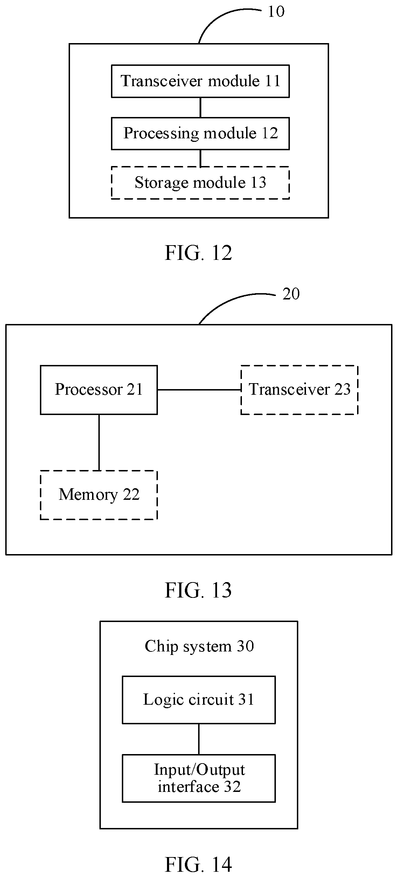

FIG. 12 is a block diagram of a communication apparatus according to an embodiment of this application;
FIG. 13 is a block diagram of a communication apparatus according to another embodiment of this application; and
FIG. 14 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. Sequence numbers of the foregoing processes do not mean an execution sequence, and the execution sequence of the processes needs be determined based on functions and internal logic of the processes.

In the specification, the claims, and the accompanying drawings of this application, the terms "first", "second", "third", "fourth", and various other ordinal number terms (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

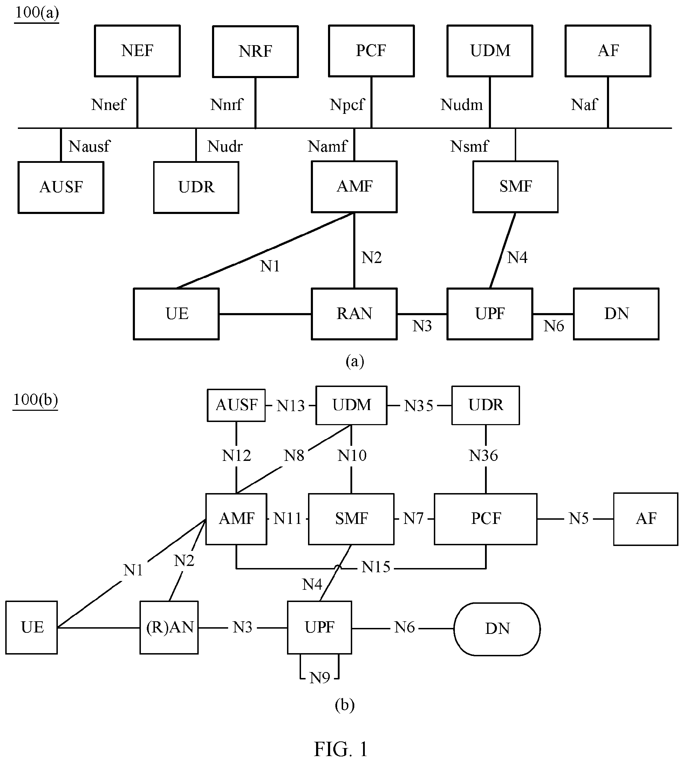

The following describes, with reference to examples in (a) in FIG. 1 and (b) in FIG. 1, a 5G system to which embodiments of this application are applicable. It should be understood that the 5G system described in this specification is merely an example, and should not constitute any limitation on this application.

It should be further understood that some network elements in the 5G system may communicate with each other through a service-based interface or a point-to-point interface. The following separately describes a 5G system framework based on the point-to-point interface and a 5G system framework based on the service-based interface with reference to (a) in FIG. 1 and (b) in FIG. 1.

As an example for description, (a) in FIG. 1 shows a diagram of an architecture of a 5G system 100 to which embodiments of this application are applicable. (a) in FIG. 1 is a diagram of a 5G network architecture based on the point-to-point interface. As shown in (a) in FIG. 1, the network architecture may include but is not limited to the following network elements (or referred to as a function network element, a functional entity, a node, a device, or the like):
a (radio) access network device (radio access network, (R)AN), an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), unified data management (unified data management, UDM), a BSF network element, and a unified data repository (unified data repository, UDR).

The following briefly describes the network elements shown in (a) in FIG. 1.
1. A user equipment (user equipment, UE) may be referred to as a terminal device (terminal device), a terminal apparatus, an access terminal, a subscriber unit, a subscriber station, a mobile station (mobile station, MS), a mobile terminal (mobile terminal, MT), a remote station, a remote terminal, a mobile equipment, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and power saving of a terminal may be implemented by using, for example, a narrowband (narrowband, NB) technology.

In addition, the terminal device may alternatively include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device capable of accessing a network. The terminal device may communicate with the access network device by using an air interface technology.

Optionally, the user equipment may be used as a base station. For example, the user equipment may be used as a scheduling entity that provides a sidelink signal between user equipment devices in V2X, D2D, or the like. For example, a cellular phone and a car communicate with each other by using a sidelink signal. The cellular phone communicates with a smart household device without relaying a communication signal through a base station.

The terminal device in embodiments of this application includes a mobile equipment (mobile equipment, ME) and a universal integrated circuit card (universal integrated circuit card, UICC). The UICC is a security device in a physical sense, for example, an IC card (or a smart card). The UICC may be inserted into or removed from the ME, and the UICC may include one or more application programs. In an implementation, an application program included in the UICC includes a universal subscriber identity module (universal subscriber identity module, USIM). It may be understood that, in a possible case, the UICC in embodiments of this application may be replaced with the USIM.

2. A (radio) access network ((radio) access network, (R)AN) device is configured to provide a network access function for an authorized user equipment in a specific area, and is capable of using transmission tunnels of different quality of service based on a level of the user equipment, a service requirement, and the like.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. A user plane function (user plane function, UPF) network element is used for packet routing and forwarding, quality of service (quality of service, QoS) handling for user plane data, and the like.

In a 5G communication system, a user plane network element may be the user plane function (user plane function, UPF) network element. In a future communication system, the user plane network element may still be the UPF network element, or may have another name. This is not limited in this application.

4. Access and mobility management function (access and mobility management function, AMF) network element: The access and mobility management function network element is mainly configured to perform mobility management, access management, and the like, and may be configured to implement another function in an MME function other than session management, for example, an access authorization/authentication function.

In the future communication system, an access and mobility management device may still be the AMF, or may have another name. This is not limited in this application.

5. A session management function (session management function, SMF) network element is mainly configured to: manage a session, allocate and manage an internet protocol (internet protocol, IP) address of a user equipment, select a termination point that can manage a user plane function, policy control, and a charging function interface, notify downlink data, and the like.

In a future communication system, a session management network element may still be the SMF network element, or may have another name. This is not limited in this application.

6. A policy control function (policy control function, PCF) network element is a unified policy framework for guiding network behavior, and provides policy rule information and the like for a control plane function network element (such as an AMF or an SMF).

In a future communication system, a policy control network element may still be the PCF network element, or may have another name. This is not limited in this application.

7. An application function (application function, AF) is configured to: perform application-affected data routing, wirelessly access a network exposure function network element, and interact with a policy framework for policy control, and the like.

In a future communication system, the application network element may still be an AF network element, or may have another name. This is not limited in this application.

8. A data management network element is configured to process an identifier of UE, and perform access authentication, registration, and mobility management, and the like. The data management network element may be a unified data management (unified data management, UDM) network element and/or a unified data repository (unified data repository, UDR) network element in the system 100.

9. An authentication server function (authentication server function, AUSF) network element is configured to provide an authentication service, generate a key to implement two-way authentication for a user equipment, and support a unified authentication framework.

In a future communication system, an authentication server function network element may still be the AUSF network element, or may have another name. This is not limited in this application.

10. A network data analysis function (network data analytics function, NWDAF) network element is configured to: identify a network slice instance, and load load-level information of the network slice instance. The network data analysis function enables NF consumers to subscribe to or unsubscribe from periodic notifications and notify the consumers when a threshold is exceeded.

In a future communication system, a network data analysis function network element may still be the NWDAF network element, or may have another name. This is not limited in this application.

11. Data network (data network, DN): The DN is a network located outside an operator network. The operator network may access a plurality of DNs, and a plurality of services may be deployed on the DN, and a service such as data and/or voice may be provided for a terminal device. For example, the DN is a private network of a smart factory, a sensor mounted in a workshop of the smart factory may be a terminal device, a control server of the sensor is deployed in the DN, and the control server may serve the sensor. The sensor may communicate with the control server to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in (a) in FIG. 1 are interface sequence numbers. For meanings of the interface sequence numbers, refer to meanings defined in a 3GPP standard protocol. This is not limited herein.

In the network architecture shown in (a) in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. A relationship between another interface and each network element is shown in FIG. 1. For brevity, details are not described herein.

(b) in FIG. 1 is a diagram of a 5G network architecture based on the point-to-point interface. For descriptions of functions of network elements, refer to descriptions of functions of corresponding network elements in FIG. 1. Details are not described again. A main difference between (b) in FIG. 1 and (a) in FIG. 1 lies in that interfaces between network elements in (b) in FIG. 1 are point-to-point interfaces rather than service-based interfaces.

In the architecture shown in (b) in FIG. 1, names and functions of interfaces between network elements are as follows:
(1) N7 is an interface between a PCF and an SMF, configured to deliver a protocol data unit (protocol data unit, PDU) session granularity and a service data flow granularity control policy.
(2) N15 is an interface between the PCF and an AMF, configured to deliver a UE policy and an access control policy.
(3) N5 is an interface between an AF and the PCF, configured to deliver application service requests and report network events.
(4) N4 is an interface between the SMF and a UPF, configured to transmit information between a control plane and a user plane, including delivery of a forwarding rule, a QoS control rule, a traffic statistics rule, and the like that are from the control plane to the user plane, and information report by the user plane.
(5) N11 is an interface between the SMF and the AMF, configured to: transmit PDU session tunnel information between a RAN and a UPF, transmit a control message sent to the UE, transmit radio resource control information sent to the RAN, and the like.
(6) N2 is an interface between the AMF and a RAN, configured to transmit radio bearer control information from a core network side to the RAN, and the like.
(7) N1 is an interface between the AMF and UE, is access-irrelevant, and is configured to transfer a QoS control rule and the like to the UE.
(8) N8 is an interface between the AMF and a UDM, and is used by the AMF to obtain access and mobility management-related subscription data and authentication data from the UDM, and to register current mobility management-related information of the UE with the UDM.
(9) N10 is an interface between the SMF and the UDM, used by the SMF to obtain session management-related subscription data from the UDM, and used by the SMF to register current session related information of the UE with the UDM.
(10) N35 represents an interface between the UDM and a UDR, and is used by the UDM to obtain user subscription data information from the UDR.
(11) N36 is an interface between the PCF and the UDR, used by the PCF to obtain policy-related subscription data and application data-related information from the UDR.
(12) N12 is an interface between the AMF and the AUSF, and is used by the AMF to initiate an authentication procedure to the AUSF, where an SUCI may be carried as a subscription identifier.
(13) N13 is an interface between the UDM and the AUSF, and is used by the AUSF to obtain a user authentication vector from the UDM, to perform the authentication procedure.

It should be understood that the foregoing names are defined only for ease of distinguishing between different functions, and should not constitute any limitation on this application. This application does not exclude a possibility that another name is used in the 5G network and another future network. For example, in the 6G network, some or all of the foregoing network elements may still use terms in 5G, or may use other names. Names of the interfaces between the network elements in (a) in FIG. 1 or (b) in FIG. 1 are merely examples. During specific implementation, the names of the interfaces may be other names. This is not specifically limited in this application. In addition, names of messages (or signaling) transmitted between the foregoing network elements are merely examples, and do not constitute any limitation on functions of the messages.

It may be understood that the foregoing network element or function may be a network element in a hardware device, may be a software function running on dedicated hardware, or may be a virtualized function instantiated on a platform (for example, a cloud platform). For ease of description, in this application, an example in which the network device is an access and mobility management function AMF and the base station is a radio access network RAN is used for description below.

It should be understood that the foregoing network architecture to which embodiments of this application are applied is merely an example for description, and the network architecture to which embodiments of this application are applicable is not limited thereto. Embodiments of this application are applicable to any network architecture that can implement the functions of the foregoing network elements.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The aspects or features of embodiments of this application may be implemented as a method, or implemented by using an apparatus or a product of standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

To facilitate understanding of the technical solutions in embodiments of this application, before the solutions in embodiments of this application are described based on a 5G architecture, some terms or concepts in 5G that may be used in embodiments of this application, and network elements that may be used in this application but are not shown in the foregoing network architecture are first briefly described.

### 1. Subscription permanent identifier (subscription permanent identifier, SUPI)

An SUPI is a 5G globally unique subscription permanent identifier allocated to each user, including four types (SUPI type): an IMSI, an NSI (network specific identifier), a global line identifier (GLI) and a global cable identifier (GCI). SUPIs of the NSI, GLI, and GCI types are all in an NAI format.

The SUPI in the NAI format is a type of SUPI generated by a third party instead of an operator. The SUPI is a common format and is expressed in a form of username@realm. The username indicates a username corresponding to the SUPI, and the realm indicates a realm name corresponding to the SUPI.

It should be noted that a length of the SUPI in this embodiment of this application is a length of the username included in the SUPI.

### 2. Subscription concealed identifier (subscription concealed identifier, SUCI)

To avoid exposing an SUPI of a user at an air interface, a result is obtained by calculating a part of content of the SUPI. The result is a part of a subscription concealed identifier (subscription concealed identifier, SUCI).

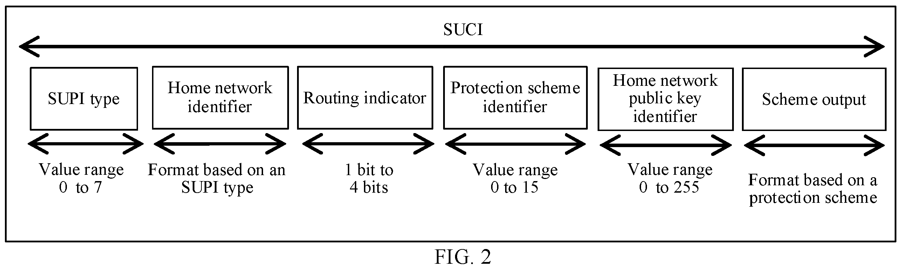

FIG. 2 shows a structure of the SUCI. As shown in FIG. 2, the SUCI mainly includes the following content.

SUPI type (SUPI type): A value ranges from 0 to 7. 0 indicates an IMSI, 1 indicates an NSI, 2 indicates a GLI, 3 indicates a GCI, and 4 to 7 are not defined.

A home network identifier (Home Network Identifier) identifies a user registration location network. When the SUPI is the IMSI, a registration location identifier of the SUPI includes an MCC and an MNC. When the SUPI is the NAI, a registration location network length of the SUPI may not represent a character string of a realm name.

When the SUPI type is the IMSI, the home network identifier is a mobile country code (mobile country code, MCC) and a mobile network code (mobile network code, MNC). When the SUPI type is the NSI, the home network identifier is a character string in a format of username@realm. When the SUPI type is the GCI, the home network identifier is in a format of 5gc.mnc<MNC>.mcc<MCC>.3gppnetwork.org.

A routing indicator (Routing Indicator) includes one to four decimal digits, and is used to identify a registered network operator and a UICC.

A protection scheme identifier (Protection Scheme Id) is used to identify an algorithm for generating the SUCI, including the following three types: NULL-scheme: 0, Profile<A>: 1, and Profile<B>: 2. To be specific, when the protection scheme Id is 0, it indicates that the SUCI is generated by using a null algorithm NULL-scheme; when the protection scheme Id is 1, it indicates that the SUCI is generated by using a Profile<A> algorithm; and when the protection scheme Id is 2, it indicates that the SUCI is generated by using a Profile<B> algorithm. The Profile<A> and the Profile<B> may be referred to as non-null algorithms. If the SUCI is generated by using a null algorithm, the SUPI is not encrypted. If the SUCI is generated by using a non-null algorithm (Profile <A> or Profile <B>), the SUPI needs to be encrypted. The Profile <A> represents an ECIES algorithm with a 256-bit public key length, and the Profile <B> represents an ECISE algorithm with a 264-bit public key length.

Home network public key identifier (Home Network Public Key Id): A value ranges from 0 to 255, a public key provided by the HPLMN is used for SUPI protection, and when no algorithm (null-scheme) is enabled, the value is 0.

A scheme output (Scheme Output) includes a string of a variable length or hexadecimal digits and is based on a used protection scheme. For example, for a SUPI in an NAI format, a parameter obtained by performing encryption calculation on a username part included in the SUPI may be used as a scheme output part of the SUCI.

It should be noted that a length of the SUCI in embodiments of this application is a length of the scheme output part included in the SUCI.

### 3. Authentication, authorization, and accounting (authentication, authorization, and accounting, AAA)

AAA is a security management device for access control in network security. It provides, for an accessed terminal device, three security services: authentication, authorization, and accounting.

The foregoing describes, with reference to (a) in FIG. 1 and (b) in FIG. 1, a network architecture to which embodiments of this application can be applied, and briefly describes basic concepts in this application. The following describes in detail a communication method and an apparatus provided in this application with reference to the accompanying drawings.

A specific structure of an execution body of a method provided in embodiments of this application is not particularly limited in the following embodiments provided that communication can be performed based on the method provided in embodiments of this application by running a program that records code of the method provided in embodiments of this application. For example, the method provided in embodiments of this application may be performed by a core network device and a terminal device, or a functional module that is in the core network device or the terminal device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in an appropriate circumstance, so that a solution other than embodiments of this application can be described.

Third, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

Fourth, in this application, "preconfigured" may include "predefined", for example, defined in a protocol. "Predefined" may be implemented in a manner of prestoring corresponding code, a table, or other related information that may be used for indication in a device (for example, including network elements). A specific implementation is not limited in this application.

Fifth, "store" in embodiments of this application may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Sixth, "protocols" in embodiments of this application may be standard protocols in the communication field, for example, may include a 5G protocol, a new radio (new radio, NR) protocol, and a related protocol applied to a future communication system. This is not limited in this application.

Seventh, in the method flowcharts in the accompanying drawings of the specification of this application, dashed boxes indicate optional steps.

The following uses interaction between network elements as an example to describe in detail the communication method provided in embodiments of this application. It should be understood that, for terms and steps in embodiments of this application, reference may be made to each other.

The following describes a network registration procedure and an authentication procedure of a mobile equipment (mobile equipment, ME) with reference to a method 300.

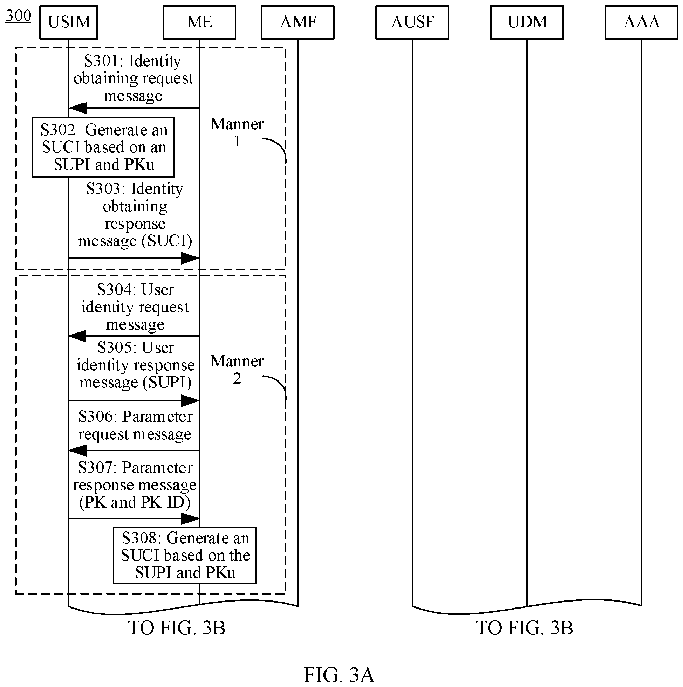

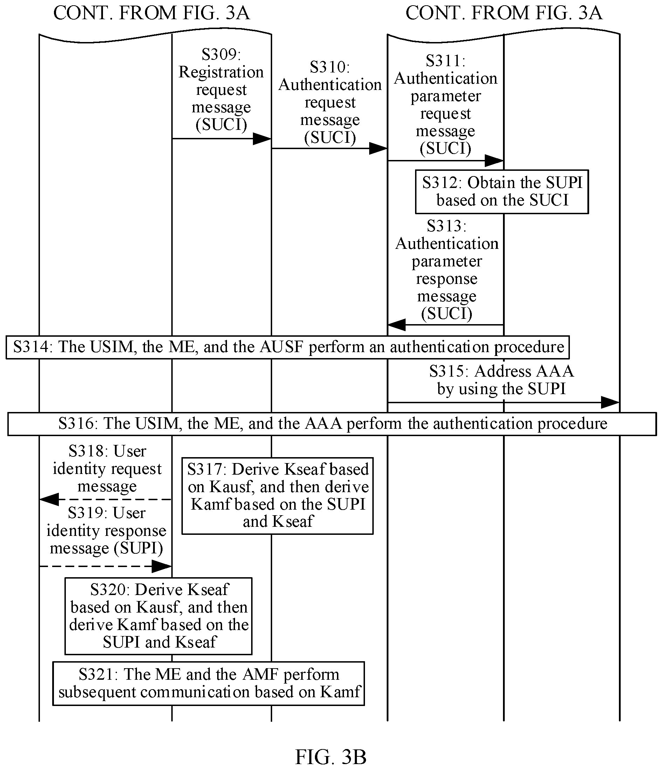

First, the ME needs to obtain an SUCI through a UICC to initiate a registration request. The following describes two possible implementations with reference to Manner 1 and Manner 2 in FIG. 3A and FIG. 3B.

### Manner 1:

S301: The ME sends an identity obtaining (Get Identity) request message to the UICC, where the identity obtaining request message is used to request to obtain the SUCI. Correspondingly, the UICC receives the identity obtaining request message from the ME.

S302: The UICC generates the SUCI based on an SUPI, PK, and a PK ID.

For example, after receiving the identity obtaining request message from the ME, the UICC generates the SUCI based on the preconfigured SUPI, the public key PK, the public key identifier PK ID, and the like. For example, the SUCI may be generated by using any one of a null algorithm (null-scheme), a Profile <A>, and a Profile <B>.

S303: The UICC sends an identity obtaining response (Get Identity Response) message to the ME, where the identity obtaining response message includes the SUCI. Correspondingly, the ME receives the identity obtaining response message from the UICC, and obtains the SUCI from the identity obtaining response message.

### Manner 2:

S304: The ME sends a user identity request (User Identity Request) message to the UICC, where the user identity request message is used to request to obtain an SUPI. Correspondingly, the UICC receives the user identity request message from the ME.

S305: The UICC sends a user identity response message to the ME, where the user identity response message includes the SUPI. Correspondingly, the ME receives the user identity response message from the UICC, and obtains the SUPI from the user identity response message.

S306: The ME sends a parameter request message to the UICC, where the parameter request message is used to request to obtain a calculation parameter of the SUCI, and the parameter request message may also be referred to as a SUCI calculation information procedure (SUCI Calculation Information procedure) message.

S307: The UICC sends a parameter response message to the ME, where the parameter response message includes a public key PK and a public key identifier PK ID. Correspondingly, UE receives the parameter response message from the UICC, and obtains PK and the PK ID from the parameter response message.

S308: The ME generates the SUCI based on the SUPI, PK, and the PK ID. For a specific manner, refer to the method for generating the SUCI by the UICC in S302.

After obtaining the SUCI, the ME initiates a registration procedure to a network side, and then the network side performs an authentication procedure on the ME. The following provides an example for description with reference to S309 to S322.

S309: The ME sends a registration request (Registration Request) message to an AMF, where the registration request message includes the SUCI. Correspondingly, the AMF receives the registration request message from the ME.

S310: The AMF sends an authentication request (Nausf_UEAuthentication_Authenticate Request) message to an AUSF, where the authentication request message includes the SUCI. Correspondingly, the AUSF receives the authentication request message from the AMF.

S311: The AUSF sends an authentication parameter request (Nudm_UEAuthentication_Get Request) message to a UDM, where the authentication parameter request message includes the SUCI. Correspondingly, the UDM receives the authentication parameter request message from the AUSF.

S312: The UDM obtains the SUPI based on the SUCI.

For example, after receiving the authentication parameter request message from the AUSF, the UDM obtains the SUCI from the authentication parameter request message, and then decrypts the SUCI to obtain the SUPI. For a specific manner, refer to an existing protocol. This is not limited in this application.

S313: The UDM sends an authentication parameter response (Nudm_UEAuthentication_Get Response) message to the AUSF, where the authentication parameter response message includes the SUPI, and a parameter or information that is used for authentication, for example, an authentication vector and an authentication mode.

S314: The UICC, the ME, and the AUSF perform the authentication procedure.

For example, the AUSF may trigger two types of authentication: internal authentication and external authentication.

The internal authentication means that the AUSF triggers authentication with UE (the ME and the UICC) based on authentication indication information. The authentication mode may be 5G AKA, EAP AKA', EAP TLS, or another EAP method. For a specific authentication mode, refer to an existing protocol. Details are not described herein.

The external authentication includes the following procedure.

S315: The AUSF addresses the AAA by using the SUPI.

For example, the AUSF sends the SUPI to an external AAA, and the AUSF may forward the SUPI to the external AAA by using an intermediate network element, for example, an NSSAAF.

S316: The UICC, the ME, and AAA perform the authentication procedure.

For example, after receiving the SUPI from the AUSF, the AAA obtains authentication information of the ME based on the SUPI, and performs authentication with the ME. An authentication method may include EAP AKA', EAP TLS, EAP TTLS, and another EAP method.

In an authentication process, the AUSF sends an authentication response (Nausf_UEAuthentication_Authenticate Response) message to the AMF. The authentication response message includes the SUPI and Kausf. Kausf is generated after the AUSF completes authentication.

In response to the authentication response message, the AMF sends an authentication complete message to the ME. Correspondingly, the ME receives the authentication complete message from the AMF. The authentication complete message indicates that the authentication is completed, and the authentication complete message may be specifically an authentication request message, an authentication result message, a security command mode message, or the like.

S317: The AMF generates Kseaf based on Kausf, and then generates Kamf based on Kseaf and the SUPI.

S318: The ME sends a user identity request (User Identity Request) message to the UICC, where the user identity request message is used to request to obtain an SUPI.

S319: The UICC sends a user identity response message to the ME, where the user identity response message includes the SUPI. Correspondingly, the ME receives the user identity response message from the UICC, and obtains the SUPI from the user identity response message.

It should be understood that, if the ME obtains the SUCI in Manner 2, the ME may not perform S318 and S319.

S320: The ME generates Kseaf based on Kausf, and then generates Kamf based on Kseaf and the SUPI. It should be understood that Kausf is generated by the ME after the authentication in S316 is completed.

S321: The ME and the AMF perform subsequent communication based on Kamf, for example, a NAS SMC procedure.

For example, the ME and the AMF further generate K_{NASenc} and K_{NASint} based on Kamf, where K_{NASenc} is used to perform encryption protection on a NAS message communicated between the mobile equipment and the mobility management network element, and K_{NASint} is used to perform integrity protection on a NAS message communicated between the mobile equipment and the mobility management network element.

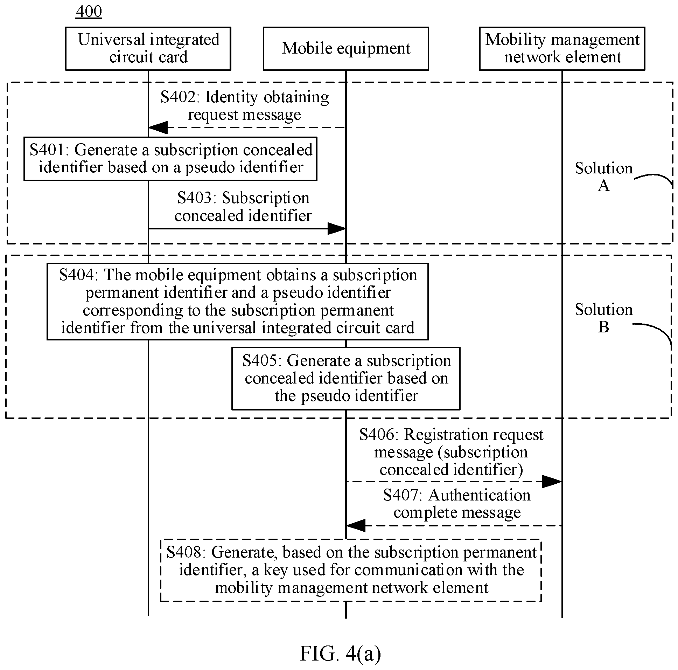

FIG. 4(a) is a schematic flowchart of a method 400 according to an embodiment of this application. The following provides an example for describing the method 400 with reference to steps in FIG. 4(a).

S401: A universal integrated circuit card generates a subscription concealed identifier based on a pseudo identifier.

For example, the universal integrated circuit card is configured with a subscription permanent identifier and the pseudo identifier corresponding to the subscription permanent identifier, a length of a username included in the pseudo identifier is different from a length of a username included in the subscription permanent identifier, and the length of the username included in the pseudo identifier is greater than a first threshold and less than a second threshold. In an implementation, values of the first threshold and the second threshold are determined by distribution of lengths of usernames included in a plurality of subscribed subscription permanent identifiers in an operator network.

The universal integrated circuit card generates the subscription concealed identifier based on the configured pseudo identifier. In an implementation, the universal integrated circuit card generates the subscription concealed identifier based on a request of a mobile equipment. The following provides an example for description with reference to S402.

Optionally, in S402, the mobile equipment sends an identity obtaining request message to the universal integrated circuit card, where the identity obtaining request message is used to request the subscription concealed identifier. Correspondingly, the universal integrated circuit card receives the identity obtaining request message from the mobile equipment.

For example, the universal integrated circuit card receives the identity obtaining request message from the mobile equipment, and then generates the subscription concealed identifier based on the pseudo identifier, that is, performs S401. In an implementation, the universal integrated circuit card determines an encryption algorithm, where the encryption algorithm is an algorithm used to generate the subscription concealed identifier. When the encryption algorithm is a non-null algorithm (for example, a Profile <A> or a Profile <B>), the universal integrated circuit card generates the subscription concealed identifier based on the non-null algorithm and the pseudo identifier. It may be understood that, when the encryption algorithm is the null algorithm, the subscription concealed identifier may be generated based on the pseudo identifier, or the subscription concealed identifier may be generated based on the subscription permanent identifier. This is not limited in this application.

It may be understood that this embodiment of this application provides a method for generating a subscription concealed identifier by using a pseudo identifier instead of a subscription permanent identifier. When the subscription permanent identifier is represented by using a network access identifier format, the username included in the subscription permanent identifier may be generated by a third party. Therefore, the length of the username included in the subscription permanent identifier may be excessively long or excessively short in comparison with a length of a username included in another subscription permanent identifier, and a quantity of samples of the subscription permanent identifier with such an abnormal length is very small. Because a length of the subscription concealed identifier is the same as the length of the username included in the subscription permanent identifier, in this case, if the subscription concealed identifier is generated based on the subscription permanent identifier, an attacker may determine the corresponding subscription permanent identifier based on the length of the subscription concealed identifier, causing user privacy leakage. However, the length of the username included in the pseudo identifier provided in this embodiment of this application is between specified thresholds (that is, between the first threshold and the second threshold). Therefore, the subscription concealed identifier is generated based on the pseudo identifier, so that the attacker can be prevented from inferring the corresponding subscription permanent identifier based on the length of the subscription concealed identifier. In an implementation, the pseudo identifier is represented by using a network access identifier format, a realm name part included in the pseudo identifier is the same as a realm name part included in the subscription permanent identifier, and a length of a username part included in the pseudo identifier is different from the length of the username included in the subscription permanent identifier. For example, the length of the username included in the subscription permanent identifier is less than the first threshold. For another example, the length of the username included in the subscription permanent identifier is greater than the second threshold.

Optionally, the subscription concealed identifier in this embodiment of this application may further include first indication information, and the first indication information indicates that the subscription concealed identifier is generated based on the pseudo identifier. The first indication information may be carried in the subscription concealed identifier when the universal integrated circuit card generates the subscription concealed identifier. For example, the first indication information may be carried in a protection scheme identifier in the subscription concealed identifier. Another network element (for example, a data management network element) may determine, based on the first indication information, that the subscription concealed identifier is generated based on the pseudo identifier.

Optionally, the pseudo identifier in this embodiment of this application may include second indication information, the second indication information indicates that the username included in the pseudo identifier is a mapped username, and the second indication information may be a preset character string. Another network element (for example, a data management network element) may determine, based on the second indication information, that the subscription concealed identifier is generated based on the pseudo identifier; another network element may determine, based on the second indication information, that the username in the pseudo identifier is not a username for user subscription; another network element may determine, based on the second indication information, that an identifier decrypted from the subscription concealed identifier is not the subscription permanent identifier; or another network element may determine, based on the second indication information, that an identifier decrypted from the subscription concealed identifier is not a username for user subscription. For example, the second indication information may be carried in the username part of the pseudo identifier. Specifically, for example, a preset character string "anonymous" is added to an original username of the pseudo identifier, and the preset character string "anonymous" represents the second indication information.

S403: The universal integrated circuit card sends the subscription concealed identifier to the mobile equipment. Correspondingly, the mobile equipment receives the subscription concealed identifier from the universal integrated circuit card.

For example, in response to the identity obtaining request message of the mobile equipment, the universal integrated circuit card sends the subscription concealed identifier to the mobile equipment.

With reference to S401 to S403, the foregoing describes a solution (denoted as a solution A) in which a mobile equipment obtains a subscription concealed identifier according to an embodiment of this application. With reference to S403 and S404, the following describes another solution (denoted as a solution B) in which a mobile equipment obtains a subscription concealed identifier according to an embodiment of this application.

S404: The mobile equipment obtains a subscription permanent identifier and a pseudo identifier corresponding to the subscription permanent identifier from a universal integrated circuit card.

For example, the universal integrated circuit card is configured with the subscription permanent identifier and the pseudo identifier corresponding to the subscription permanent identifier. For a meaning of the pseudo identifier, refer to the descriptions in S401. Details are not described herein again.

In an implementation, the mobile equipment sends a user identity request message to the universal integrated circuit card, and the universal integrated circuit card sends the subscription permanent identifier and the pseudo identifier to the mobile equipment based on the user identity request message. Correspondingly, the mobile equipment receives the subscription permanent identifier and the pseudo identifier from the universal integrated circuit card.

In another implementation, the mobile equipment sends a user identity request message to the universal integrated circuit card, and the universal integrated circuit card sends the subscription permanent identifier to the mobile equipment based on the user identity request message. Further, the mobile equipment sends a calculation information request message to the universal integrated circuit card, and the universal integrated circuit card sends a public key and the pseudo identifier to the mobile equipment based on the calculation information request message, where the public key is used to generate the subscription concealed identifier. Correspondingly, the mobile equipment receives the public key and the pseudo identifier from the universal integrated circuit card.

In other words, the universal integrated circuit card may send the subscription permanent identifier and the pseudo identifier to the mobile equipment in a same message, or may send the subscription permanent identifier and the pseudo identifier to the mobile equipment in different messages.

S405: The mobile equipment generates the subscription concealed identifier based on the pseudo identifier.

It should be understood that a manner in which the mobile equipment generates the subscription concealed identifier based on the pseudo identifier is similar to a manner in which the universal integrated circuit card generates the subscription concealed identifier based on the pseudo identifier. For details, refer to the descriptions in S401. Details are not described herein again.

Further, the mobile equipment may initiate a registration procedure based on the obtained subscription concealed identifier. The following provides an example for description with reference to S405 to S407.

Optionally, in S406, the mobile equipment sends a registration request message to a mobility management network element, where the registration request message includes the subscription concealed identifier. Correspondingly, the mobility management network element receives the registration request message from the mobile equipment.

Optionally, in S407, the mobility management network element sends an authentication complete message to the mobile equipment. Correspondingly, the mobile equipment receives the authentication complete message from the mobility management network element.

For example, after network-side authentication is completed, the mobility management network element sends the authentication complete message to the mobile equipment.

Optionally, in S408, the mobile equipment generates, based on the subscription permanent identifier, a key used for communication with the mobility management network element.

For example, after receiving the authentication complete message from the mobility management network element, the mobile equipment generates, based on the subscription permanent identifier in response to the authentication complete message, the key used for communication with the mobility management network element. For example, the mobile equipment generates Kseaf based on Kausf, and then generates Kamf based on Kseaf and the subscription permanent identifier. Further, K_{NASenc} and K_{NASint} are generated based on Kamf, where K_{NASenc} is used to perform encryption protection on a NAS message transmitted between the mobile equipment and the mobility management network element, and K_{NASint} is used to perform integrity protection on the NAS message transmitted between the mobile equipment and the mobility management network element. Kausf represents a key used between the mobile equipment and an authentication service function network element, Kseaf represents a key used between the mobile equipment and an authentication anchor function network element, Kamf represents a key used between the mobile equipment and the mobility management network element, and K_{NASenc} and K_{NASint} are keys used for communication between the mobile equipment and the mobility management network element. It should be understood that Kausf may be generated after the mobile equipment completes authentication.

It may be understood that, in the foregoing solution A, if the mobile equipment has not obtained the subscription permanent identifier after S407, the mobile equipment may request to obtain the subscription permanent identifier from the universal integrated circuit card. For example, the mobile equipment sends a user identity request message to the universal integrated circuit card, and the universal integrated circuit card sends the subscription permanent identifier to the mobile equipment based on the user identity request message.

In the foregoing solution, the universal integrated circuit card generates the subscription concealed identifier based on the pseudo identifier. Because the length of the username included in the pseudo identifier is greater than the first threshold and less than the second threshold, a length of the generated subscription concealed identifier is also greater than the first threshold and less than the second threshold. Therefore, a case in which an attacker can infer a user identity based on the length of the subscription concealed identifier because the length of the subscription concealed identifier is excessively long or excessively short (for example, greater than the second threshold or less than the first threshold) can be avoided, to protect user privacy.

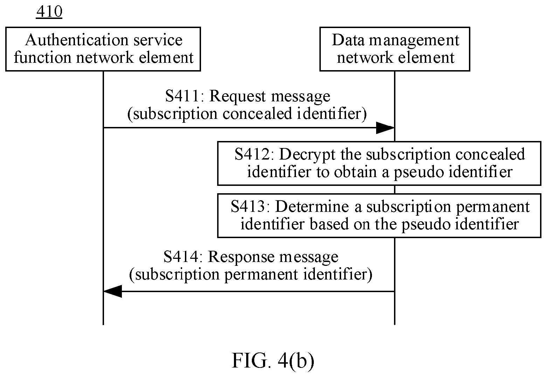

FIG. 4(b) is a schematic flowchart of a method 410 according to an embodiment of this application. It may be understood that the method 410 may be independently implemented, or may be implemented in combination with the method 400. For example, the method 400 may be a solution performed before the method 410.

The following provides an example for describing the method 410 with reference to FIG. 4(b).

S411: An authentication service function network element sends a request message to a data management network element, where the request message includes a subscription concealed identifier. Correspondingly, the data management network element receives the request message from the authentication service function network element.

In a possible implementation, the authentication service function network element receives, from a mobility management network element, an authentication request message that carries the subscription concealed identifier, and in response to the authentication request message, the authentication service function network element sends the request message to the data management network element, where the request message carries the subscription concealed identifier. The request message may be an authentication parameter request message, and the request message is used to request, from the data management network element, an authentication parameter corresponding to the subscription concealed identifier.

S412: The data management network element decrypts the subscription concealed identifier to obtain a pseudo identifier.

For example, after receiving the request message from the authentication service function network element, the data management network element obtains the subscription concealed identifier from the request message, and then decrypts the subscription concealed identifier to obtain an identifier. The data management network element may determine whether the identifier is the pseudo identifier, or the data management network element may determine whether the subscription concealed identifier is generated based on the pseudo identifier, or the data management network element determines whether S413 needs to be performed.

In a possible implementation, when the subscription concealed identifier includes first indication information, the data management network element determines that the identifier obtained through decryption is the pseudo identifier, or the data management network element determines that the subscription concealed identifier is generated based on the pseudo identifier, or the data management network element determines that a corresponding subscription permanent identifier needs to be determined based on the identifier obtained through decryption (that is, determines whether S413 needs to be performed). For brevity, the first description is used as an example for description in subsequent implementations. The first indication information indicates that the subscription concealed identifier is generated based on the pseudo identifier.

In another possible implementation, when the pseudo identifier includes second indication information, the data management network element determines that the identifier obtained through decryption is the pseudo identifier, where the second indication information indicates that the subscription concealed identifier is generated based on the pseudo identifier. The second indication information may be a preset character or character string.

In still another possible implementation, when the data management network element does not store subscription data corresponding to the pseudo identifier, the data management network element retrieves whether a mapping relationship corresponding to the identifier is stored. If the mapping relationship exists, the data management network element determines that the identifier obtained through decryption is the pseudo identifier, where the mapping relationship is a mapping relationship between the pseudo identifier and the subscription permanent identifier, and the data management network element is preconfigured with the mapping relationship in advance.

In still another possible implementation, after obtaining the pseudo identifier, the data management network element retrieves subscription data corresponding to the pseudo identifier, and when the subscription data corresponding to the pseudo identifier exists and the subscription data includes third indication information, the data management network element determines that the subscription concealed identifier is generated based on the pseudo identifier.

S413: The data management network element determines the subscription permanent identifier based on the pseudo identifier.

For example, when the data management network element determines that the identifier obtained through decryption is the pseudo identifier, or when the data management network element determines that the subscription concealed identifier is generated based on the pseudo identifier, or when the data management network element determines that the subscription permanent identifier needs to be determined based on the identifier obtained through decryption, the data management network element determines the subscription permanent identifier based on the pseudo identifier.

In an implementation, the data management network element determines the subscription permanent identifier based on the pseudo identifier and the preconfigured mapping relationship, where the mapping relationship is the mapping relationship between the pseudo identifier and the subscription permanent identifier.

In another possible implementation, after obtaining the pseudo identifier, the data management network element retrieves subscription data corresponding to the pseudo identifier, and if the subscription permanent identifier exists in the subscription information, the data management network element directly obtains the subscription permanent identifier corresponding to the pseudo identifier from the subscription data. It may be understood that in this implementation, the data management network element may not need to determine whether the identifier obtained through decryption is the pseudo identifier.

S414: The data management network element sends a response message to the authentication service function network element, where the response message includes the subscription permanent identifier determined by the data management network element in S413.

In the foregoing solution, after obtaining the subscription concealed identifier, the data management network element decrypts the subscription concealed identifier to obtain the pseudo identifier, determines the subscription permanent identifier based on the pseudo identifier, and uses the subscription permanent identifier to perform a subsequent procedure. Because the length of the username included in the pseudo identifier is greater than the first threshold and less than the second threshold, a length of the subscription concealed identifier is also greater than the first threshold and less than the second threshold. Therefore, a case in which an attacker can infer a user identity based on the length of the subscription concealed identifier because the length of the subscription concealed identifier is excessively long or excessively short (for example, greater than the second threshold or less than the first threshold) can be avoided, to protect user privacy.

Based on the 5G system, the following describes in detail the communication method provided in embodiments of this application. It should be understood that the subsequent method 500 to the method 1100 may be applied to the network architecture shown in (a) in FIG. 1 or (b) in FIG. 1. In an implementation, a UICC in the method 500 to the method 1100 may correspond to the universal integrated circuit card in the method 400, an ME in the method 500 to the method 1100 may correspond to the mobile equipment in the method 400, an AMF in the method 500 to the method 1100 may correspond to the mobility management network element in the method 400, an AUSF in the method 500 to the method 1100 may correspond to the authentication service function network element in the method 410, and a UDM in the method 500 to the method 1100 may correspond to the data management network element in the method 410, a PSUPI in the method 500 to the method 1100 may correspond to the pseudo identifier in the method 400 and the method 410, and a threshold #1 and a threshold #2 in the method 500 to the method 1100 may correspond to the first threshold and the second threshold in the method 400 and the method 410.

FIG. 5(a)-1 and FIG. 5(a)-2 are a schematic flowchart of a method 500 according to an embodiment of this application. In the method 500, a UICC is preconfigured with an SUPI and a PSUPI corresponding to the SUPI. After an ME requests an SUCI from the UICC, the UICC may generate the SUCI based on the PSUPI and send the SUCI to the ME, and the ME executes a registration process based on the SUCI. The following describes the method 500 by using an example with reference to steps in FIG. 5(a)-1 and FIG. 5(a)-2.

S501a: The UICC is configured with the SUPI and the pseudo subscription permanent identifier (pseudonym subscription permanent identifier, PSUPI) corresponding to the SUPI.

For example, the UICC is preconfigured with the SUPI and the PSUPI, and the PSUPI is in one-to-one correspondence with the SUPI, or there is a mapping relationship between the PSUPI and the SUPI. For example, when the UICC is activated, the SUPI and the PSUPI corresponding to the SUPI are manually configured on the UICC. It may be understood that the PSUPI may also be referred to as another name. For example, the PSUPI may also be referred to as a pseudonym, a pseudo identifier, or the like. This is not limited in this application.

In an implementation, both the PSUPI and the SUPI in this embodiment are represented by using an NAI format, and a specific format is username@realm, where the username represents a username, and the realm represents a realm name. A realm included in the PSUPI is the same as the realm included in the SUPI, but a username included in the PSUPI is different from a username included in the SUPI.

In an implementation, a length of the username included in the PSUPI is greater than a threshold #1 and less than a threshold #2, and the length of the username included in the SUPI is different from the length of the username included in the PSUPI. In a possible case, the length of the username included in the SUPI is less than the threshold #1. In another possible case, a length of the username included in the SUPI is greater than the threshold #2. In other words, the length of the username included in the PSUPI is within a specified threshold range, but the length of the username in the SUPI is out of the specified threshold range. Values of the threshold #1 and the threshold #2 herein are determined by distribution of lengths of usernames included in a plurality of subscribed SUPIs in an operator network. The following describes a possible implementation by using an example with reference to FIG. 5(b).

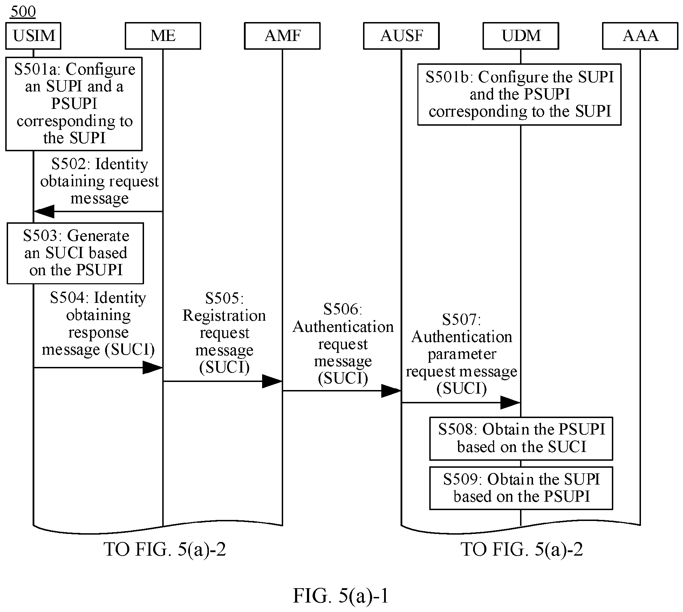

First, statistics may be collected on the lengths of the usernames included in the plurality of SUPIs subscribed to by an operator. In an implementation, the plurality of SUPIs herein may be all SUPIs subscribed to by the operator. It is assumed that the distribution of the lengths of the usernames in the SUPIs is shown in FIG. 5(b), and a curve in FIG. 5(b) is a curve of a relationship between the length of the username included in the SUPI and a count value of the SUPI. x and y corresponding to a value of K may be determined by setting the value of K, where x is less than y, and both x and y are positive numbers. Herein, x and y may respectively correspond to the threshold #1 and the threshold #2 in the foregoing example. In other words, the threshold range may be determined by setting the value of K. In the example of FIG. 5(b), the length of the username included in the PSUPI is between x and y, and the length of the username included in the SUPI is less than x or greater than y. In other words, for any SUPI whose length of the username is less than x or greater than y, a PSUPI whose length of the username is greater than x and less than y is configured. In an implementation, when the length of the username included in the PSUPI is determined, a number may be randomly selected between x and y as the length of the username included in the PSUPI, or a specific manner is used, so that lengths of usernames included in different PSUPIs are evenly distributed between x and y. An advantage of this is to prevent the lengths of the usernames included in PSUPI from being excessively centralized. As a result, an attacker can infer a user identity based on the length of the username included in the PSUPI.

For example, the username included in the PSUPI may be generated in any one of the following manners.

Manner 1: Generate the username with a length between x and y randomly by using an allowed character string, where the allowed character string is a character string that may be used to construct an NAI and that is specified in RFC 7542 or RFC 3629. If the username in combination with the realm overlap with an SUPI after the username is generated, a new username is generated.

Manner 2: Form the username by using a preset character string and a count in an ascending manner, for example, user_1 and user_2.

Manner 3: Generate the username by using a preset character string and a randomly generated character string.

Manner 4: Perform a hash operation on a current SUPI by using a hash function to generate the username. Optionally, another freshness input, such as a realm, a random number, or a counter, may be added. The hash function may be KDF, MD5, SHA1, or the like. If the username in combination with the realm overlap with an SUPI after the username is generated, a new username is generated after the freshness input is changed.

In an implementation, the PSUPI includes indication information #1, and the indication information #1 indicates that the username included in the PSUPI is a mapped username. The indication information #1 may be, for example, a preset character string, and the preset character string may use a character string that cannot be used to construct a username. For example, the indication information #1 may be carried in a username part of the PSUPI, and a preset character string "anonymous" is added in addition to an original username.

It may be understood that, in the solution provided in the foregoing embodiment, if the length of the username included in the SUPI is less than the threshold #1 or greater than the threshold #2, a PSUPI is configured for the SUPI, and the length of the username included in the PSUPI is greater than the threshold #1 or less than the threshold #2. However, in another possible implementation, if a quantity of SUPIs whose lengths of usernames are less than the threshold #1 or greater than the threshold #2 is large, lengths of usernames included in PSUPIs configured for these SUPIs may not be between the threshold #1 and the threshold #2. For example, if a quantity of SUPIs whose usernames are less than the threshold #1 is greater than K, lengths of usernames of PSUPIs configured for these SUPIs may be less than the threshold #1. For example, the lengths of the usernames included in the PSUPIs corresponding to these SUPIs may be set to a same value that is less than the threshold #1.

S501b: A UDM is configured with the SUPI and the PSUPI corresponding to the SUPI.

For S501b, refer to the descriptions of S501a. A difference lies in that S501b is performed by the UDM. Details are not described herein again.

S502: The ME sends an identity obtaining (Get Identity) request message to the UICC. Correspondingly, the UICC receives the identity obtaining request message from the ME. It should be understood that S502 is similar to S301 in the method 300. Details are not described herein again.

S503: The UICC generates the SUCI based on the PSUPI.

Optionally, before generating the SUCI, the UICC determines an encryption algorithm used to generate the SUCI. When the encryption algorithm is a null algorithm, the UICC generates the SUCI based on the SUPI.

When the encryption algorithm is a non-null algorithm, the UICC generates the SUCI based on the PSUPI. For example, the UICC generates a pair of a public key PKu and a private key PRu, generates a symmetric key based on the private key PRu and a public key PK of the UDM, and then uses the username and the symmetric key of the PSUPI as input parameters to perform the encryption operation to obtain a ciphertext that is used as a scheme output part of the SUCI, and then pads with another field to obtain the SUCI. For a specific process, refer to an existing protocol. This is not limited in this application.

Optionally, the UICC may further include indication information #2 in the SUCI, where the indication information #2 indicates that the SUCI is generated based on the PSUPI. For example, the indication information #2 may be carried in an SUCI protection scheme identifier.

S504: The UICC sends an identity obtaining response message to the ME, where the identity obtaining response message includes the SUCI generated by the UICC in S503. Correspondingly, the ME receives the identity obtaining response message from the UICC, and obtains the SUCI from the identity obtaining response message.

It should be understood that S505 to S507 are similar to S309 to S311 in the method 300. Details are not described herein again.

S508: The UDM obtains the PSUPI based on the SUCI.

For example, after receiving an authentication parameter request message from an AUSF, the UDM obtains the SUCI from the authentication parameter request message, and then decrypts the SUCI to obtain the PSUPI. For example, the UDM decrypts the SUCI by using the public key PKu in the SUCI and the preconfigured private key PR, to obtain the PSUPI.

S509: The UDM obtains the SUPI based on the PSUPI.

In an implementation, when the username included in the PSUPI includes the indication information #1, the UDM determines, based on the indication information #1, that the SUCI is generated based on the PSUPI. For example, if the username included in the PSUPI includes the character string "anonymous", it is determined that the SUCI is generated based on the PSUPI. Further, the UDM retrieves, based on the PSUPI, whether a mapping relationship including the PSUPI exists. If the mapping relationship exists, the UDM determines, based on the PSUPI and the mapping relationship, the SUPI corresponding to the PSUPI.

In another implementation, when the SUCI carries the indication information #2, the UDM determines, based on the indication information #2, that the SUCI is generated based on the PSUPI. Based on this, the UDM retrieves, based on the PSUPI, whether a mapping relationship including the PSUPI exists. If the mapping relationship exists, the UDM determines, based on the PSUPI and the mapping relationship, the SUPI corresponding to the PSUPI.

In still another implementation, after obtaining the PSUPI, the UDM retrieves whether subscription data corresponding to the PSUPI exists. If the subscription data does not exist, the UDM retrieves, based on the PSUPI, whether a mapping relationship including the PSUPI exists. If the mapping relationship exists, the UDM determines, based on the PSUPI and the mapping relationship, the SUPI corresponding to the PSUPI.

In still another implementation, after obtaining the PSUPI, the UDM retrieves subscription data corresponding to the PSUPI. If the subscription data corresponding to the PSUPI exists and the subscription data includes indication information #3, the UDM determines that the SUCI is generated based on the PSUPI. Based on this, the UDM retrieves, based on the PSUPI, whether a mapping relationship including the PSUPI exists. If the mapping relationship exists, the UDM determines, based on the PSUPI and the mapping relationship, the SUPI corresponding to the PSUPI. The mapping relationship refers to a mapping relationship between PSUPI and SUPI.

In still another implementation, after obtaining the PSUPI, the UDM retrieves subscription data corresponding to the PSUPI. If the SUPI exists in the subscription information, the UDM directly obtains, from the subscription data, the SUPI corresponding to the PSUPI.

S510 to S518 are similar to S313 to S321 in the method 300. Details are not described herein again. FIG. 6A and FIG. 6B show a schematic flowchart of a method 600 according to an embodiment of this application. In the method 600, a UICC is preconfigured with an SUPI and a PSUPI corresponding to the SUPI. After an ME requests the SUPI from the UICC, the UICC may send the SUPI and the PSUPI corresponding to the SUPI together to the ME, so that the ME generates an SUCI based on the PSUPI and uses the generated SUCI to initiate a registration procedure. The following describes steps of the method 600 by using an example with reference to FIG. 6A and FIG. 6B.

S601a: The UICC is configured with the SUPI and the PSUPI corresponding to the SUPI.

S601b: AUDM is configured with the SUPI and the PSUPI corresponding to the SUPI.

It should be understood that S601a and S601b are similar to S501a and S501b in the method 500. Details are not described herein again.

S602: The ME sends a user identity request (User Identity Request) message to the UICC, where the user identity request message is used to request to obtain the SUPI. Correspondingly, the UICC receives the user identity request message from the ME.

S603: The UICC sends a user identity response message to the ME, where the user identity response message includes the SUPI and the PSUPI. Correspondingly, the ME receives the user identity response message from the UICC, and obtains the PSUPI from the user identity response message.

S604 and S605 are similar to S306 and S307 in the method 300. Details are not described herein again.

S606: The ME generates the SUCI based on the PSUPI.

Optionally, before generating the SUCI, the ME determines an encryption algorithm used to generate the SUCI. When the encryption algorithm is a null algorithm, the ME generates the SUCI based on the PSUPI.

When the encryption algorithm is a non-null algorithm, the ME generates the SUCI based on the PSUPI. For example, the ME generates a pair of public keys PKu and private keys PRu, generates a symmetric key based on the private key PRu and a public key PK of the UDM obtained from the UICC, and uses the username and the symmetric key of the PSUPI as input parameters to perform the encryption operation to obtain a ciphertext that is used as a scheme output part of the SUCI, and then pads with another field to obtain the SUCI. For a specific process, refer to an existing protocol. This is not limited in this application.

S607 to S609 are similar to S309 to S311 in the method 300, S610 and S611 are similar to S508 and S509 in the method 500, and S612 to S618 are similar to S313 to S321 in the method 300. Details are not described herein again.

FIG. 7A and FIG. 7B show a schematic flowchart of a method 700 according to an embodiment of this application. In the method 700, a UICC is preconfigured with an SUPI and a PSUPI corresponding to the SUPI. After an ME requests a calculation parameter of an SUCI from the UICC, the UICC may send the PSUPI, PK, and a PK ID together to the ME, so that the ME generates the SUCI based on the PSUPI, and uses the generated SUCI to initiate a registration process. The following describes steps of the method 700 by using an example with reference to FIG. 7A and FIG. 7B.

S701a: The UICC is configured with the SUPI and the PSUPI corresponding to the SUPI.

S701b: AUDM is configured with the SUPI and the PSUPI corresponding to the SUPI.

It should be understood that S601a and S601b are similar to S501a and S501b in the method 500. Details are not described herein again.

S702 to S704 are similar to S304 to S306 in the method 300. Details are not described herein again.

S705: The UICC sends a parameter response message to the ME, where the parameter response message includes the PSUPI, PK, and the PK ID. Correspondingly, the ME receives the parameter response message from the UICC, and obtains the PSUPI, PK, and the PK ID from the parameter response message.

S706: The ME generates the SUCI based on the PSUPI. S706 is similar to S606 in the method 600. Details are not described herein again.

S707 to S709 are similar to S309 to S311 in the method 300, S710 and S711 are similar to S508 and S509 in the method 500, and S712 to S718 are similar to S313 to S321 in the method 300. Details are not described herein again.

In the foregoing method 500 to the method 700, a user equipment (the UICC or the ME) generates the SUCI based on the PSUPI. Because a length of a username included in the PSUPI is greater than a threshold #1 and less than a threshold #2, a length of the generated SUCI is also greater than the threshold #1 and less than the threshold #2. Therefore, a case in which an attacker can infer a user identity based on the length of the SUCI because the length of the subscription concealed identifier is excessively long or excessively short can be avoided, thereby protecting user privacy. For example, when a length of a username included in the SUPI is greater than the threshold #2 or less than the threshold #1, if the SUPI is used to generate the SUCI, the attacker may infer a corresponding SUPI based on the length of the SUCI, causing user privacy leakage. In this case, if the PSUPI corresponding to the SUPI is used to generate the SUCI, user privacy security can be improved. In addition, in the foregoing solution, although the PSUPI is used to generate the SUCI, in a subsequent procedure, the SUPI is used to generate Kamf. Therefore, a lawful interception requirement can still be met, and it is ensured that a subscribed user can access a network.

FIG. 8A and FIG. 8B show a schematic flowchart of a method 800 according to an embodiment of this application. In the method 800, a UICC is preconfigured with two thresholds, namely, a threshold #1 and a threshold #2. The UICC may predetermine whether a length of a username included in an SUPI is greater than the threshold #2 or less than the threshold #1. If the length of the username included in the SUPI is greater than the threshold #2 or less than the threshold #1, the UICC generates a PSUPI based on the SUPI, generates an SUCI based on the PSUPI, and sends the SUCI generated based on the PSUPI to an ME, so that the ME can use the SUCI to perform a registration procedure. The following describes steps of the method 800 by using an example with reference to FIG. 8A and FIG. 8B.

S801a: The UICC is preconfigured with the threshold #1 and the threshold #2.

For example, the threshold #2 is greater than the threshold #1, and both the threshold #2 and the threshold #1 are greater than 0. The threshold #1 and the threshold #2 may be preconfigured on the UICC when the UICC is activated. The threshold #1 and the threshold #2 are used to determine whether the PSUPI needs to be generated, or the threshold #1 and the threshold #2 are used to determine whether the SUCI is generated based on the PSUPI, or the threshold #1 and the threshold #2 are used to determine whether there is a security risk of using an SUCI generated based on the SUPI.

S802a: The UICC determines whether a length of the SUPI is greater than the threshold #2 or less than the threshold #1.

For example, when writing the SUPI, the UICC may determine whether the length of the SUPI is greater than the threshold #2 or less than the threshold #1.

When a length of a username included in the SUPI is greater than the threshold #2 or less than the threshold #1, the UICC determines that the PSUPI needs to be generated, or the UICC determines that the SUCI needs to be generated based on the PSUPI, or the UICC determines that there is a security risk of using the SUCI generated based on the SUPI. Based on this, the UICC performs S803a.

S803a: The UICC generates the PSUPI corresponding to the SUPI.

For example, for a definition of the PSUPI, refer to the descriptions of S501a in the method 500. Details are not described herein again.

When the length of the username included in the SUPI is less than the threshold #1, the UICC may generate a username included in the PSUPI by using the following methods.

Manner a: Pad the username included in the current SUPI with a character string to a preset length. The character string used for padding may be consecutive same characters, for example, 0x20, or may be a random combination of character strings that cannot be used to construct an NAI according to RFC 7542 or RFC 3629. The preset length may be a length between the threshold #1 and the threshold #2.

Manner b: Perform a hash operation, by using a hash function, on the username included in the current SUPI, to generate the username included in the PSUPI, where a length of the generated username included in the PSUPI is between the threshold #1 and the threshold #2. Optionally, another freshness input, for example, a realm, a random number, or a counter, may be further added when the hash operation is performed. The hash function may be KDF, MD256, or the like.

After the USIM generates the username, it is determined whether the username in combination with the realm overlap with a normal SUPI. If the username in combination with the realm overlap with the normal SUPI, a new username is generated after a freshness parameter is changed. In this case, the UICC further needs to preconfigure a freshness parameter.

When the length of the username included in the SUPI is greater than the threshold #2, the UICC may generate, in Manner b, a username part included in the PSUPI.

After generating the PSUPI, the UICC stores a mapping relationship between the PSUPI and the SUPI.

S801b: A UDM is preconfigured with the threshold #2 and the threshold #1.

S802b: The UDM determines whether a length of the SUPI is greater than the threshold #2 or less than the threshold #1.

For example, when writing the SUPI, the UDM may determine whether the length of the SUPI is greater than the threshold #2 or less than the threshold #1.

Optionally, when a length of the SUPI is greater than the threshold #2 or less than the threshold #1, the UDM performs S803b.

It should be noted that a manner in which the UDM generates the username included in the PSUPI should be consistent with a manner in which the UICC generates the username included in the PSUPI.

It should be further noted that, if the UICC and the UDM generate the PSUPI in Manner a when the length of the SUPI is less than the threshold #1, the UDM may not perform S803b.

It should be further noted that, if the UDM performs S803b, after generating the PSUPI, the UDM stores a mapping relationship between the SUPI and the PSUPI.

S804 to S810 are similar to S502 to S508 in the method 500. For brevity, details are not described herein again.

S811: The UDM obtains the SUPI based on the PSUPI.

For example, if the UDM performs S803b, the UDM determines the SUPI based on the PSUPI and the locally stored mapping relationship between the SUPI and the PSUPI. For a determining manner, refer to S509. If the UDM does not perform S803b, in other words, the UICC and the UDM generate the PSUPI in Manner a, the UICC may obtain the SUPI by deleting a character string padded by the PSUPI.

S812 to S820 are similar to S313 to S321 in the method 300. Details are not described herein again.

FIG. 9A and FIG. 9B show a schematic flowchart of a method 900 according to an embodiment of this application. In the method 900, a UICC is preconfigured with two thresholds, namely, a threshold #1 and a threshold #2. After an ME requests the UICC to obtain an SUPI, the UICC may determine whether a length of a username included in an SUPI is greater than the threshold #2 or less than the threshold #1. If the length of the username included in the SUPI is greater than the threshold #2 or less than the threshold #1, the UICC generates a PSUPI based on the SUPI, generates an SUCI based on the PSUPI, and sends the SUCI generated based on the PSUPI to an ME, so that the ME can use the SUCI to perform a registration procedure. The following describes steps of the method 900 by using an example with reference to FIG. 9A and FIG. 9B.

S901a: The UICC is preconfigured with the threshold #1 and the threshold #2. S901a is similar to S801a in the method 800. Details are not described herein again.

S902a: The ME sends an identity obtaining request message to the UICC. Correspondingly, the UICC receives the identity obtaining request message from the ME.

S903a: The UICC determines whether a length of the SUPI is greater than the threshold #2 or less than the threshold #1.

For example, after receiving the identity obtaining request message from the ME, the UICC determines whether the length of the SUPI is greater than the threshold #2 or less than the threshold #1.

When the length of the SUPI is greater than the threshold #2 or less than the threshold #1, the UICC performs S904a. It should be understood that S903a is similar to S802a in the method 800, and a difference lies in different performing occasions.

S904 is similar to S803a in the method 800, S905 is similar to S805 in the method 800, S901b to S903b are similar to S801b to S803b in the method 800, S906 is similar to S303 in the method 300, S907 to S909 are similar to S309 to S311 in the method 300, S910 and S911 are similar to S810 and S811 in the method 800, and S912 to S920 are similar to S313 to S321 in the method 300. Details are not described herein again.

In the foregoing method 800 to the method 900, before generating the SUCI, the UICC first determines whether the length of the username of the SUPI is greater than the threshold #2 or less than the threshold #1. When the length of the username included in the SUPI is greater than the threshold #2 or less than the threshold #1, the SUCI is generated based on the PSUPI corresponding to the SUPI. Because a length of a username included in the PSUPI is greater than a threshold #1 and less than a threshold #2, a length of the generated SUCI is also greater than the threshold #1 and less than the threshold #2. Therefore, a case in which an attacker can infer a user identity based on the length of the SUCI because the length of the subscription concealed identifier is excessively long or excessively short can be avoided, thereby protecting user privacy. However, if the length of the username included in the SUPI is greater than the threshold #2 or less than the threshold #1, and the SUPI is used to generate the SUCI, the attacker may infer a corresponding SUPI by using the length of the SUCI, causing privacy leakage.

FIG. 10A and FIG. 10B show a schematic flowchart of a method 1000 according to an embodiment of this application. In the method 1000, a UICC is preconfigured with two thresholds, namely, a threshold #1 and a threshold #2. The UICC may predetermine whether a length of a username included in the SUPI is greater than the threshold #2 or less than the threshold #1, and if the length of the username included in the SUPI is greater than the threshold #2 or less than the threshold #1, generate the PSUPI based on the SUPI. The UICC may send the PSUPI to an ME, so that the ME may generate an SUCI based on the PSUPI, and then use the SUCI to perform a registration procedure. The following describes steps of the method 1000 by using an example with reference to FIG. 10A and FIG. 10B.

It should be understood that S1001a to S1003a are similar to S801a to S803a in the method 800, and S1001b to S1003b are similar to S801b to S803b in the method 800. Details are not described herein again.

S1004: The ME sends an identity obtaining request message to the UICC. Correspondingly, the UICC receives the identity obtaining request message from the ME.

S1005: The UICC sends an identity obtaining response message to the ME, where the identity obtaining response message includes the SUPI and the PSUPI. Correspondingly, the ME receives the identity obtaining response message from the UICC, and obtains the SUPI and the PSUPI from the identity obtaining response message.

S1006 and S1007 are similar to S306 and S307 in the method 300. Details are not described herein again.

It should be understood that the foregoing example is described by using an example in which the UICC sends the PSUPI to the ME in S1005. However, the UICC may further send the PSUPI to the ME in S1007. This is not limited in this application.

S1008: The ME generates the SUIC based on the PSUPI. S1008 is similar to S606 in the method 600. Details are not described herein again.

S1009 to S1011 are similar to S309 to S311 in the method 300, S1012 and S1013 are similar to S810 and S811 in the method 800, and S1014 to S1020 are similar to S313 to S321 in the method 300. Details are not described herein again.

In the foregoing method 1000, the UICC may determine whether a length of a username of the SUPI is greater than the threshold #2 or less than the threshold #1. When the length of the username included in the SUPI is greater than the threshold #2 or less than the threshold #1, the UICC generates the PSUPI corresponding to the SUPI, and sends the PSUPI to the ME, so that the ME can generate the SUCI based on the PSUPI. Because a length of a username included in the PSUPI is greater than a threshold #1 and less than a threshold #2, a length of the generated SUCI is also greater than the threshold #1 and less than the threshold #2. Therefore, a case in which an attacker can infer a user identity based on the length of the SUCI because the length of the subscription concealed identifier is excessively long or excessively short can be avoided, thereby protecting user privacy. However, if the length of the username included in the SUPI is greater than the threshold #2 or less than the threshold #1, and the SUPI is used to generate the SUCI, the attacker may infer a corresponding SUPI by using the length of the SUCI, causing privacy leakage.

FIG. 11A and FIG. 11B show a schematic flowchart of a method 1100 according to an embodiment of this application. In the method 1100, a UICC is preconfigured with two thresholds, namely, a threshold #1 and a threshold #2. The UICC may send the two thresholds to an ME, so that the ME may determine whether a length of a username included in the SUPI is greater than the threshold #2 or less than the threshold #1. If the length of the username included in the SUPI is greater than the threshold #2 or less than the threshold #1, the ME generates a PSUPI based on the SUPI, generates an SUCI based on the PSUPI, and then uses the SUCI to perform a registration procedure. The following describes steps of the method 1100 by using an example with reference to FIG. 11A and FIG. 11B.

S1101a: The UICC is preconfigured with the threshold #1 and the threshold #2. S1001a is similar to S801a in the method 800. Details are not described herein again.

S1102a to S1104 are similar to S304 to S306 in the method 300, and S1101b, S1106b, and S1107b are similar to S801b to S803b in the method 800. Details are not described herein again.

S1105: The UICC sends a parameter response message to the ME, where the parameter response message includes the threshold #1, the threshold #2, PK, and a PK ID.

S1106: The ME determines whether a length of the SUPI is greater than the threshold #2 or less than the threshold #1.

For example, after receiving the SUPI, the threshold #1, and the threshold #2, the ME determines whether the length of the SUPI is greater than the threshold #2 or less than the threshold #1.

When the length of the SUPI is greater than the threshold #1 or less than the threshold #2, the ME determines that the PSUPI needs to be generated, or the ME determines that the SUCI needs to be generated based on the PSUPI, or the ME determines that there is a security risk of using the SUCI generated based on the SUPI. Based on this, the ME performs S1107a.

S1107: The ME generates the PSUPI corresponding to the SUPI.

S1107 is similar to S803a in the method 800, and a difference lies in that S803a is performed by the UICC, and S1107a is performed by the ME. Details are not described herein again.

S1108 is similar to S606 in the method 600, S1109 to S1111 are similar to S309 to S311 in the method 300, S1001b to S1103b are similar to S801b to S803b in the method 800, S1112 and S1113 are similar to S810 and S811 in the method 800, S1114 to S1118 are similar to S313 to S317 in the method 300, and S1119 and S1120 are similar to S320 and S321 in the method 300. Details are not described herein again.

In the foregoing method 1100, the ME may obtain the threshold #1 and the threshold #2 from the UICC, and before generating the SUCI, first determine whether the length of the username of the SUPI is greater than the threshold #2 or less than the threshold #1. When the length of the username included in the SUPI is greater than the threshold #2 or less than the threshold #1, the ME generates the SUCI by using the PSUPI corresponding to the SUPI. Because a length of a username included in the PSUPI is greater than a threshold #1 and less than a threshold #2, a length of the generated SUCI is also greater than the threshold #1 and less than the threshold #2. Therefore, a case in which an attacker can infer a user identity based on the length of the SUCI because the length of the subscription concealed identifier is excessively long or excessively short can be avoided, thereby protecting user privacy. However, if the length of the username included in the SUPI is greater than the threshold #2 or less than the threshold #1, and the SUPI is used to generate the SUCI, the attacker may infer a corresponding SUPI by using the length of the SUCI, causing privacy leakage.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 12 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the universal integrated circuit card (for example, the universal integrated circuit card in the method 400 and the method 410, or the UICC in the method 500 to the method 1100) in the foregoing method embodiments, or may be a component (for example, a chip) of the universal integrated circuit card.

The apparatus 10 may implement corresponding steps or procedures performed by the universal integrated circuit card in the foregoing method embodiments. The transceiver module 11 may be configured to perform operations related to receiving and sending of the universal integrated circuit card in the foregoing method embodiments. The processing module 12 may be configured to perform processing-related operations of the universal integrated circuit card in the foregoing method embodiments.

In a possible implementation, the processing module 12 is configured to generate a subscription concealed identifier based on a pseudo identifier, where a length of a username included in the pseudo identifier is different from a length of a username included in a subscription permanent identifier, and the length of the username included in the pseudo identifier is greater than a first threshold and less than a second threshold; and the transceiver module 11 is configured to send the subscription concealed identifier to a mobile equipment.

In a second design, the apparatus 10 may correspond to the data management network element (for example, the data management network element in the method 410 or the UDM in the method 500 to the method 1100) in the foregoing method embodiments, or may be a component (for example, a chip) of the data management network element.

The apparatus 10 may implement corresponding steps or procedures performed by the data management network element in the foregoing method embodiments. The transceiver module 11 may be configured to perform operations related to receiving and sending of the data management network element in the foregoing method embodiments. The processing module 12 may be configured to perform processing-related operations of the data management network element in the foregoing method embodiments.

In a possible implementation, the transceiver module 11 is configured to receive a request message from an authentication service function network element, where the request message includes a subscription concealed identifier. The processing module 12 is configured to decrypt the subscription concealed identifier to obtain a pseudo identifier; determine a subscription permanent identifier based on the pseudo identifier, where a length of a username included in the pseudo identifier is different from a length of a username included in the subscription permanent identifier, and the length of the username included in the pseudo identifier is greater than a first threshold and less than a second threshold. The transceiver module 11 is further configured to send a response message to the authentication service function network element, and the response message includes the subscription permanent identifier.

In a third design, the apparatus 10 may correspond to the mobile equipment (for example, the mobile equipment in the method 400, or the ME in the method 500 to the method 1100) in the foregoing method embodiments, or may be a component (for example, a chip) of the mobile equipment.

The apparatus 10 may implement corresponding steps or procedures performed by the mobile equipment in the foregoing method embodiments. The transceiver module 11 may be configured to perform operations related to receiving and sending of the mobile equipment in the foregoing method embodiments. The processing module 12 may be configured to perform processing-related operations of the mobile equipment in the foregoing method embodiments.

In a possible implementation, the transceiver module 11 is configured to obtain a subscription permanent identifier and a pseudo identifier corresponding to the subscription permanent identifier from a universal integrated circuit card, where a length of a username included in the pseudo identifier is different from a length of a username included in the subscription permanent identifier, and the length of the username included in the pseudo identifier is greater than a first threshold and less than a second threshold. The processing module 12 is configured to generate a subscription concealed identifier based on the pseudo identifier. The transceiver module 11 is further configured to send a registration request message to a mobility management network element, where the registration request message includes the subscription concealed identifier and a mobile equipment receives an authentication complete message from the mobility management network element. The processing module 12 is further configured to generate, based on the subscription permanent identifier, a key used for communication with the mobility management network element.

It should be understood that a specific process in which the modules perform the foregoing corresponding steps has been described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform the procedures and/or the steps corresponding to the mobility management network element in the foregoing method embodiments. Alternatively, the apparatus 10 may be specifically the terminal device in the foregoing embodiments, and may be configured to perform the procedures and/or the steps corresponding to the terminal device in the foregoing method embodiments. To avoid repetition, details are not described herein again.

The apparatus 10 in the foregoing solutions has a function of implementing the corresponding step performed by the device (for example, the mobility management network element, the session management network element, the relay terminal device, or the remote terminal device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

FIG. 13 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 13, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 13, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement operations performed by the universal integrated circuit card in the foregoing method embodiments.

In another solution, the apparatus 20 is configured to implement operations performed by the data management network element in the foregoing method embodiments.

In another solution, the apparatus 20 is configured to implement operations performed by the mobile equipment in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 14 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In another solution, the chip system 30 is configured to implement operations performed by a universal integrated circuit card (the universal integrated circuit card in FIG. 4(a) or the UICC in FIG. 5(a)-1 to FIG. 11B) in the foregoing method embodiments.

For example, the logic circuit 31 is configured to implement processing-related operations performed by the universal integrated circuit card in the foregoing method embodiments, for example, a processing-related operation performed by the mobility management network element in the embodiment shown in FIG. 4(a) or a processing-related operation performed by the UICC in the embodiment shown in any one of FIG. 5(a)-1 to FIG. 11B. The input/output interface 32 is configured to implement operations related to sending and/or receiving and performed by the universal integrated circuit card in the foregoing method embodiments, for example, an operation related to sending and/or receiving and performed by the universal integrated circuit card in the embodiment shown in FIG. 4(a) or an operation related to sending and/or receiving performed by the UICC in the embodiment shown in any one of FIG. 5(a)-1 to FIG. 11B.

In another solution, the chip system 30 is configured to implement operations performed by the data management network element (for example, the data management network element in FIG. 4(b) or the UDM in FIG. 5(a)-1 to FIG. 11B) in the foregoing method embodiments.

For example, the logic circuit 31 is configured to implement processing-related operations performed by the data management network element in the foregoing method embodiments, for example, a processing-related operation performed by the data management network element in the embodiment shown in FIG. 4(b) or a processing-related operation performed by the UDM in the embodiment shown in any one of FIG. 5(a)-1 to FIG. 11B. The input/output interface 32 is configured to implement operations related to sending and/or receiving and performed by the session management network element in the foregoing method embodiments, for example, an operation related to sending and/or receiving and performed by the data management network element in the embodiment shown in FIG. 4(b) or an operation related to sending and/or receiving performed by the UDM in the embodiment shown in any one of FIG. 5(a)-1 to FIG. 11B.

In another solution, the chip system 30 is configured to implement operations performed by the mobile equipment (the mobile equipment in FIG. 4(a) or the ME in FIG. 5(a)-1 to FIG. 11B) in the foregoing method embodiments.

For example, the logic circuit 31 is configured to implement processing-related operations performed by the mobile equipment in the foregoing method embodiments, for example, a processing-related operation performed by the mobile equipment in the embodiment shown in FIG. 4(a) or a processing-related operation performed by the ME in the embodiment shown in any one of FIG. 5(a)-1 to FIG. 11B. The input/output interface 32 is configured to implement operations related to sending and/or receiving and performed by the mobile equipment in the foregoing method embodiments, for example, an operation related to sending and/or receiving and performed by the mobile equipment in the embodiment shown in FIG. 4(a) or an operation related to sending and/or receiving performed by the ME in the embodiment shown in any one of FIG. 5(a)-1 to FIG. 11B.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the methods performed by the mobility management network element in the foregoing method embodiments.

For another example, when a computer program is executed by a computer, the computer is enabled to implement the method performed by the terminal device in the foregoing method embodiments.

An embodiment of this application further provides a computer program product, including instructions. When the instructions are executed by a computer, the methods performed by the device (for example, the universal integrated circuit card, the mobile equipment, or the data management network element) in the foregoing method embodiments are implemented.

An embodiment of this application further provides a terminal device, including the foregoing universal integrated circuit card and the mobile equipment.

An embodiment of this application further provides a communication system, including the foregoing data management network element. Optionally, the foregoing universal integrated circuit card and the mobile equipment are further included.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a web site, computer, server, or data center to another web site, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method applied to a terminal device, wherein the terminal device comprises a universal integrated circuit card and a mobile equipment, the universal integrated circuit card is configured with a subscription permanent identifier and a pseudo identifier corresponding to the subscription permanent identifier, and the method comprises:
sending, by the mobile equipment, an identity obtaining request message to the universal integrated circuit card;
receiving, by the universal integrated circuit card, the identity obtaining request message from the mobile equipment;
in response to the identity obtaining request message, generating, by the universal integrated circuit card, a subscription concealed identifier based on the pseudo identifier, wherein a length of a username comprised in the pseudo identifier is different from a length of a username comprised in the subscription permanent identifier, and the length of the username comprised in the pseudo identifier is greater than a first threshold and less than a second threshold;
sending, by the universal integrated circuit card, the subscription concealed identifier to the mobile equipment;
receiving, by the mobile equipment, the subscription concealed identifier from the universal integrated circuit card; and
sending, by the mobile equipment, a registration request message to a mobility management network element, wherein the registration request message comprises the subscription concealed identifier.

2. The method according to claim 1, wherein the method further comprises:
receiving, by the mobile equipment, an authentication complete message from the mobility management network element;
sending, by the mobile equipment, a user identity request message to the universal integrated circuit card;
receiving, by the universal integrated circuit card, the user identity request message from the mobile equipment;
in response to the user identity request message, sending, by the universal integrated circuit card, the subscription permanent identifier to the mobile equipment;
receiving, by the mobile equipment, the subscription permanent identifier from the universal integrated circuit card; and
generating, by the mobile equipment based on the subscription permanent identifier, a key used for communication with the mobility management network element.

3. The method according to claim 1 or 2, wherein the length of the username comprised in the subscription permanent identifier is less than the first threshold or greater than the second threshold.

4. The method according to any one of claims 1 to 3, wherein values of the first threshold and the second threshold are determined by distribution of lengths of usernames comprised in a plurality of subscribed subscription permanent identifiers in an operator network.

5. The method according to any one of claims 1 to 4, wherein the method further comprises:
determining, by the universal integrated circuit card, an encryption algorithm; and
the generating, by the universal integrated circuit card, a subscription concealed identifier based on the pseudo identifier is specifically:
when the encryption algorithm is a non-null algorithm, generating, by the universal integrated circuit card, the subscription concealed identifier based on the pseudo identifier and the encryption algorithm.

6. The method according to any one of claims 1 to 5, wherein the subscription concealed identifier comprises first indication information, and the first indication information indicates that the subscription concealed identifier is generated based on the pseudo identifier.

7. The method according to any one of claims 1 to 5, wherein the pseudo identifier comprises second indication information, and the second indication information indicates that the username comprised in the pseudo identifier is a mapped username.

8. The method according to any one of claims 1 to 7, wherein both the pseudo identifier and the subscription permanent identifier are represented in a network access identifier format.

9. A communication method applied to a universal integrated circuit card, wherein the universal integrated circuit card is configured with a subscription permanent identifier and a pseudo identifier corresponding to the subscription permanent identifier, and the method comprises:
generating, by the universal integrated circuit card, a subscription concealed identifier based on the pseudo identifier, wherein a length of a username comprised in the pseudo identifier is different from a length of a username comprised in the subscription permanent identifier, and the length of the username comprised in the pseudo identifier is greater than a first threshold and less than a second threshold; and
sending, by the universal integrated circuit card, the subscription concealed identifier to a mobile equipment.

10. The method according to claim 9, wherein the method further comprises:
receiving, by the universal integrated circuit card, a user identity request message from the mobile equipment; and
in response to the user identity request message, sending, by the universal integrated circuit card, the subscription permanent identifier to the mobile equipment.

11. The method according to claim 9 or 10, wherein the length of the username comprised in the subscription permanent identifier is less than the first threshold or greater than the second threshold.

12. The method according to any one of claims 1 to 3, wherein values of the first threshold and the second threshold are determined by distribution of lengths of usernames comprised in a plurality of subscribed subscription permanent identifiers in an operator network.

13. The method according to any one of claims 9 to 12, wherein the method further comprises:
determining, by the universal integrated circuit card, an encryption algorithm; and
the generating, by the universal integrated circuit card, a subscription concealed identifier based on the pseudo identifier is specifically:
when the encryption algorithm is a non-null algorithm, generating, by the universal integrated circuit card, the subscription concealed identifier based on the pseudo identifier and the encryption algorithm.

14. The method according to any one of claims 9 to 13, wherein the subscription concealed identifier comprises first indication information, and the first indication information indicates that the subscription concealed identifier is generated based on the pseudo identifier.

15. The method according to any one of claims 9 to 13, wherein the pseudo identifier comprises second indication information, and the second indication information indicates that the username comprised in the pseudo identifier is a mapped username.

16. The method according to any one of claims 9 to 15, wherein both the pseudo identifier and the subscription permanent identifier are represented in a network access identifier format.

17. A communication method applied to a data management network element, wherein the data management network element is configured with a subscription permanent identifier and a pseudo identifier corresponding to the subscription permanent identifier, and the method comprises:
receiving, by the data management network element, a request message from an authentication service function network element, wherein the request message comprises a subscription concealed identifier;
decrypting, by the data management network element, the subscription concealed identifier to obtain the pseudo identifier;
determining, by the data management network element, the subscription permanent identifier based on the pseudo identifier, wherein a length of a username comprised in the pseudo identifier is different from a length of a username comprised in the subscription permanent identifier, and the length of the username comprised in the pseudo identifier is greater than a first threshold and less than a second threshold; and
sending, by the data management network element, a response message to the authentication service function network element, wherein the response message comprises the subscription permanent identifier.

18. The method according to claim 17, wherein the length of the username comprised in the subscription permanent identifier is less than the first threshold or greater than the second threshold.

19. The method according to claim 17 or 18, wherein values of the first threshold and the second threshold are determined by distribution of lengths of usernames comprised in a plurality of subscribed subscription permanent identifiers in an operator network.

20. The method according to any one of claims 17 to 19, wherein the determining, by the data management network element, the subscription permanent identifier based on the pseudo identifier comprises:
when the subscription concealed identifier comprises first indication information, determining, by the data management network element, the subscription permanent identifier based on the pseudo identifier, wherein the first indication information indicates that the subscription concealed identifier is generated based on the pseudo identifier.

21. The method according to any one of claims 7 to 19, wherein the determining, by the data management network element, the subscription permanent identifier based on the pseudo identifier comprises:
when the pseudo identifier comprises second indication information, determining, by the data management network element, the subscription permanent identifier based on the pseudo identifier, wherein the second indication information indicates that the subscription concealed identifier is generated based on the pseudo identifier.

22. The method according to any one of claims 17 to 19, wherein the determining, by the data management network element, the subscription permanent identifier based on the pseudo identifier comprises:
when the data management network element does not store subscription data corresponding to the pseudo identifier, determining, by the data management network element, the subscription permanent identifier based on the pseudo identifier.

23. The method according to any one of claims 17 to 22, wherein both the pseudo identifier and the subscription permanent identifier are represented in a network access identifier format.

24. A communication method, comprising:
obtaining, by a mobile equipment from a universal integrated circuit card, a subscription permanent identifier and a pseudo identifier corresponding to the subscription permanent identifier, wherein a length of a username comprised in the pseudo identifier is different from a length of a username comprised in the subscription permanent identifier, and the length of the username comprised in the pseudo identifier is greater than a first threshold and less than a second threshold;
generating, by the mobile equipment, a subscription concealed identifier based on the pseudo identifier;
sending, by the mobile equipment, a registration request message to a mobility management network element, wherein the registration request message comprises the subscription concealed identifier;
receiving, by the mobile equipment, an authentication complete message from the mobility management network element; and
in response to the authentication complete message, generating, by the mobile equipment based on the subscription permanent identifier, a key used for communication with the mobility management network element.

25. The method according to claim 24, wherein the length of the username comprised in the subscription permanent identifier is less than the first threshold or greater than the second threshold.

26. The method according to claim 24 or 25, wherein values of the first threshold and the second threshold are determined by distribution of lengths of usernames comprised in a plurality of subscribed subscription permanent identifiers in an operator network.

27. The method according to any one of claims 24 to 26, wherein the subscription concealed identifier comprises first indication information, and the first indication information indicates that the subscription concealed identifier is generated based on the pseudo identifier.

28. The method according to any one of claims 24 to 27, wherein the pseudo identifier comprises second indication information, and the second indication information indicates that the username comprised in the pseudo identifier is a mapped username.

29. The method according to any one of claims 24 to 28, wherein the obtaining, by a mobile equipment from a universal integrated circuit card, a subscription permanent identifier and a pseudo identifier corresponding to the subscription permanent identifier comprises:
sending, by the mobile equipment, a user identity request message to the universal integrated circuit card; and
receiving, by the mobile equipment, the subscription permanent identifier and the pseudo identifier from the universal integrated circuit card.

30. The method according to any one of claims 24 to 28, wherein the obtaining, by a mobile equipment from a universal integrated circuit card, a subscription permanent identifier and a pseudo identifier corresponding to the subscription permanent identifier comprises:
sending, by the mobile equipment, a user identity request message to the universal integrated circuit card;
receiving, by the mobile equipment, the subscription permanent identifier from the universal integrated circuit card;
sending, by the mobile equipment, a calculation information request message to the universal integrated circuit card; and
receiving, by the mobile equipment, a public key and the pseudo identifier from the universal integrated circuit card, wherein the public key is used to generate the subscription concealed identifier.

31. The method according to any one of claims 24 to 30, wherein both the pseudo identifier and the subscription permanent identifier are represented in a network access identifier format.

32. A communication apparatus, wherein the apparatus comprises a module configured to perform the method according to any one of claims 9 to 16, a module configured to perform the method according to any one of claims 17 to 23, or a module configured to perform the method according to any one of claims 24 to 31.

33. A terminal device, comprising a universal integrated circuit card and a mobile equipment, wherein the universal integrated circuit card is configured to perform the method according to any one of claims 9 to 16, and the mobile equipment is configured to perform the method according to any one of claims 24 to 31.

34. A communication apparatus, comprising:
a processor, configured to execute a computer program stored in a memory, to enable the apparatus to perform the method according to any one of claims 9 to 16, to enable the apparatus to perform the method according to any one of claims 17 to 23, or to enable the apparatus to perform the method according to any one of claims 24 to 31.

35. A computer program product, wherein the computer program product comprises instructions used to perform the method according to any one of claims 9 to 16, the computer program product comprises instructions used to perform the method according to any one of claims 17 to 23, or the computer program product comprises instructions used to perform the method according to any one of claims 4 to 31.

36. A computer-readable storage medium, wherein the computer-readable storage medium stores a computer program, and when the computer program is run on a computer, the computer is enabled to perform the method according to any one of claims 9 to 16, the computer is enabled to perform the method according to any one of claims 17 to 23, or the computer is enabled to perform the method according to any one of claims 24 to 31.
